# EUROPEAN PATENT APPLICATION

(11) **EP 1 624 677 A1**
(43) Date of publication of application: **08.02.2006**
(21) Application number: 05106450.9
(22) Date of filing: 14.07.2005
(51) Int. Cl.: H04N 5/445

(54) **Signal reproducing apparatus and signal reproducing method**

(30) Priority: 27.07.2004 JP 2004219190; 27.09.2004 JP 2004280703
(71) Applicant: KABUSHIKI KAISHA TOSHIBA, Tokyo (JP)
(72) Inventor: MIYAZAWA, Akira, 105-8001, Tokyo (JP); MIYAZAKI, Koji, 105-8001, Tokyo (JP); NAKAMURA, Takashi, 105-8001, Tokyo (JP); MUGURUMA, Kazuhiko, 105-8001, Tokyo (JP); ARAHATA, Daisuke, 105-8001, Tokyo (JP)
(74) Representative: Henkel, Feiler & Hänzel

(57) **Abstract**

Provided is an apparatus and method for selectively recording a program reproduced from an input signal in a plurality of picture recorders (19, 25, 27, 28, 33, 34, 36 to 39, 41, 42), each of which is connected to enable input and output of information in a predetermined information transmission mode, wherein information indicating programs recorded in the plurality of picture recorders (19, 25, 27, 28, 33, 34, 36 to 39, 41, 42) are displayed to be listed by a preset predetermined number dating back from the most recently recorded program.

## Description

The present invention relates to a signal reproducing apparatus and a signal reproducing method for reproducing a picture signal and a voice signal etc. of a program from an input signal, and more particularly, to a signal reproducing apparatus and method preferably used for a digital television broadcast receiver or the like.

In recent years, digitization of television broadcasting has been promoted. For example, in Japan, in addition to satellite digital broadcasting such as broadcasting satellite (BS) digital broadcasting and 110-degree communication satellite (CS) digital broadcasting, terrestrial digital broadcasting has also been started.

In a digital broadcast receiver which receives such digital television broadcasting, it becomes possible to digitally record a received program or reproducing a recorded program by connecting a digital picture recorder having a large capacity such as, for example, a hard disk drive (HDD).

Further, currently, a plurality of digital picture recorders are networked to be connected to one digital broadcast receiver, whereby the digital broadcast receiving device can carry out picture recording of a program by specifying an arbitrary digital picture recorder and can carry out reproduction of a program by an arbitrary digital picture recorder.

In the meantime, in a digital broadcast receiver which is thus capable of connecting a plurality of digital picture recorders via network, it is important that a user can easily manage a program recorded in each digital picture recorder and can reproduce a desired recorded program by speedily making a search for the program.

In Jpn. Pat. Appln. KOKAI Publication No. 2003-18515, there is disclosed a technique of selecting desired contents from among all the contents of an AV device connected via a network and acquiring and executing a control program of the AV device having the contents recorded therein, thereby displaying a list of the contents recorded in the AV device on a screen.

In addition, in Jpn. Pat. Appln. KOKAI Publication No. 2001-339683, there is disclosed a technique of making a search for, reserving, and recording a program which includes a keyword inputted to make a search for a program from program information; arranging keywords of recorded programs; and displaying them, for example, on a keyword by keyword basis, thereby facilitating a search of the recorded program.

Further, in Jpn. Pat. Appln. KOKAI Publication No. 2001-268467, there is disclosed a technique of, when a program to be broadcast or a recorded program is searched while a genre indicated by EPG supplied via a broadcast or a general purpose network is defined as a key, enabling new registration as a genre item a program attribute provided to each program other than the genre provided as standard to each program.

The present invention has been made in view of the above-described circumstance. It is an object of the present invention to provide a signal reproducing apparatus and a signal reproducing method comprising a navigation function for a user to enable management of a program recorded in a plurality of connected picture recorders and enabling reproduction of a desired recorded program by speedily making a search for the program.

According to an embodiment of the present invention, a signal reproducing apparatus comprises: an input section configured to receive a signal including a program; a processing section configured to carry out processing for obtaining a program from the signal inputted to the input section; a picture recording control section configured to cause a plurality of picture recorders to selectively record the program obtained by the processing section; and a display control section configured to display information indicating the program recorded in each of the plurality of picture recorders by the picture recording control section to be listed by a preset predetermined number dating back from the most recently recorded program.

According to an embodiment of the present invention, a signal reproducing method comprises:
a first step in which a signal including a program is inputted; a second step in which a program is obtained from the signal inputted in the first step; a third step in which a plurality of picture recorders are caused to selectively record the program obtained in the second step; and a fourth step in which the information indicating the programs recorded in the plurality of picture recorders in the third step are displayed to be listed by a preset predetermined number dating back from the most recently recorded program.

According to the above-described invention, there is provided an apparatus and method which cause a plurality of picture recorders to selectively record a program obtained from an input signal, wherein information indicating programs recorded in the plurality of picture recorders is displayed as a list by a preset predetermined number of items dating back from the most recently recorded program. Thus, there can be provided a navigation function for a user to easily enable management of programs recorded in the plurality of connected picture recorders, thereby making it possible to reproduce a desired recorded program by speedily making a search for the program.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing an embodiment of the present invention and schematically illustrating an example of a digital television broadcast receiver and a network system mainly composed of the receiver;
FIG. 2 is a block diagram illustrating an example of a main signal processing system of the digital television broadcast receiver in the embodiment;
FIG. 3 is an external view showing an example of a remote controller of the digital television broadcast receiver in the embodiment;
FIG. 4 is a flow chart showing an example of an operation in which the digital television broadcast receiver in the embodiment records a program in a digital recording device;
FIG. 5 is a view showing an example of a program chart displayed during the recording operation of the digital television broadcast receiver in the embodiment;
FIG. 6 is a flow chart showing an example of an operation in which the digital television broadcast receiver in the embodiment reproduces a program from the digital recording device;
FIG. 7 is a view showing an example of a navigation menu displayed during the reproducing operation of the digital television broadcast receiver in the embodiment;
FIG. 8 is a view showing an example illustrating a state in which an item of a recorded program has been selected from the navigation menu in the embodiment;
FIG. 9 is a view showing an example of a list display screen of the most recently recorded programs obtained from the navigation menu in the embodiment;
FIG. 10 is a view for explaining a photo reproducing function of the digital television broadcast receiver in the embodiment;
FIG. 11 is a view showing an example of an E-mail call arrival screen of the digital television broadcast receiver in the embodiment;
FIG. 12 is a view showing an example of an E-mail display screen of the digital television broadcast receiver in the embodiment;
FIG. 13 is a view showing an example of an input changing screen of an analog system of the digital television broadcast receiver in the embodiment;
FIG. 14 is a view for explaining an example of a list display screen of favorite programs of the digital television broadcast receiver in the embodiment;
FIG. 15 is a view showing an example of a program search screen of the digital television broadcast receiver in the embodiment;
FIG. 16 is a view showing an example of a list display screen of connected devices of the digital television broadcast receiver in the embodiment;
FIG. 17 is a view showing an example of a list display screen of programs recorded in a specific connected device of the digital television broadcast receiver in the embodiment;

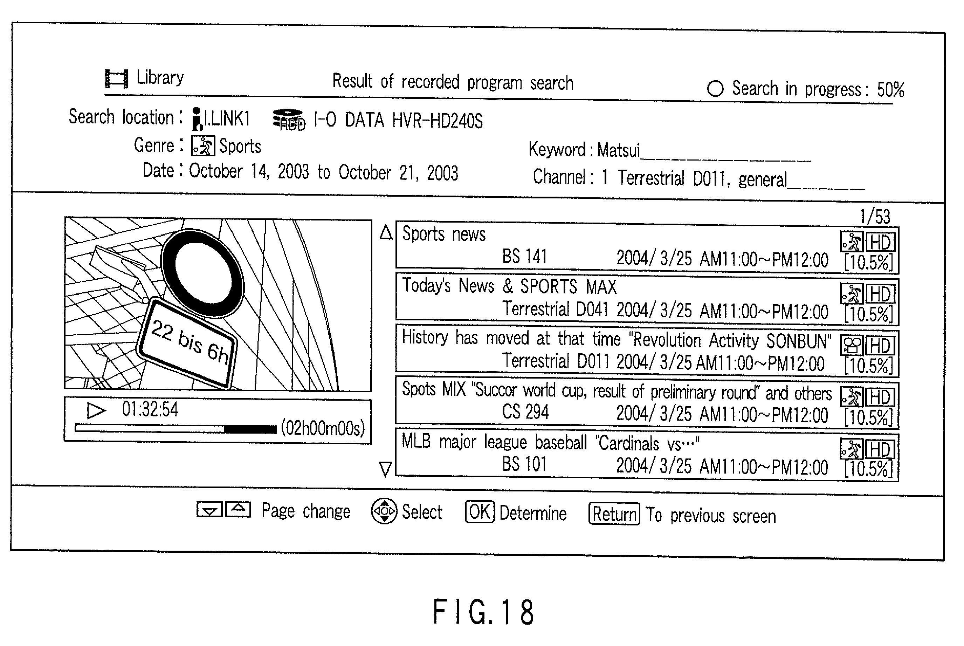

FIG. 18 is a view showing an example of a list display screen of programs searched from the programs recorded in the specific connected device of the digital television broadcast receiver in the embodiment;
FIG. 19 is a flow chart showing an example of an operation for setting a program specifying reservation in the digital television broadcast receiver in the embodiment;
FIG. 20 is a view for explaining an example of a variety of setting screens when setting a program specifying reservation in the digital television broadcast receiver in the embodiment (1/3);
FIG. 21 is a view for explaining an example of a variety of setting screens when setting a program specifying reservation in the digital television broadcast receiver in the embodiment (2/3);
FIG. 22 is a view for explaining an example of a variety of setting screens when setting a program specifying reservation in the digital television broadcast receiver in the embodiment (3/3);
FIG. 23 is a flow chart showing an example of an operation for setting a date-and-time specifying reservation in the digital television broadcast receiver in the embodiment;
FIG. 24 is a view for explaining an example of a variety of setting screens when setting a date-and-time specifying reservation in the digital television broadcast receiver in the embodiment (1/4);
FIG. 25 is a view for explaining an example of a variety of setting screens when setting a date-and-time specifying reservation in the digital television broadcast receiver in the embodiment (2/4);
FIG. 26 is a view for explaining an example of a variety of setting screens when setting a date-and-time specifying reservation in the digital television broadcast receiver in the embodiment (3/4);
FIG. 27 is a view for explaining an example of a variety of setting screens when setting a date-and-time specifying reservation in the digital television broadcast receiver in the embodiment (4/4);
FIG. 28 is a flow chart showing an example of a viewing program picture recording operation of the digital television broadcast receiver in the embodiment;
FIG. 29 is a view showing an example of a picture recording setting screen for the digital television broadcast receiver in the embodiment to make a viewing program picture recording operation;
FIG. 30 is a flow chart showing an example of an operation after picture recording of the digital television broadcast receiver in the embodiment has been executed;
FIG. 31 is a view showing an example of an output setting screen of the digital television broadcast receiver in the embodiment;
FIG. 32 is a flow chart showing an example of a reserved picture recording operation outputted and set by the digital television broadcast receiver in the embodiment;
FIG. 33 is a flow chart showing an example of a viewing program picture recording operation outputted and set by the digital television broadcast receiver in the embodiment;
FIG. 34 is a flow chart showing an example of a recorded program searching operation of the digital television broadcast receiver in the embodiment;
FIG. 35 is a view for explaining an example of a library screen of a recorded program searching operation in the embodiment;
FIG. 36 is a view for explaining an example of a recorded program searching screen of the recorded program searching operation in the embodiment;
FIG. 37 is a view for explaining an example of a genre setting screen of the recorded program searching operation in the embodiment;
FIG. 38 is a view for explaining an example of a keyword setting screen of the recorded program searching operation in the embodiment;
FIG. 39 is a view for explaining an example of a date setting screen of the recorded program searching operation in the embodiment;
FIG. 40 is a view for explaining an example of a channel setting screen of the recorded program searching operation in the embodiment;
FIG. 41 is a view for explaining an example of a search location setting screen of the recorded program searching operation in the embodiment;
FIG. 42 is a view for explaining an example of a screen of a recorded program search result of the recorded program searching operation in the embodiment;
FIG. 43 is a flow chart showing an example of an operation for reproducing a program selected from the screen of the recorded program search result in the embodiment;
FIG. 44 is a flow chart showing an example of an operation in which the digital television broadcast receiver in the embodiment automatically registers a NAS connected to a LAN;
FIG. 45 is a flow chart showing an example of an operation in which the digital television broadcast receiver in the embodiment automatically registers a NAS connected to a NAS exclusive port of the LAN;
FIG. 46 is a view for explaining an example of a directory structure in the NAS in the embodiment;
FIG. 47 is a flow chart showing an example of an operation in which the digital television broadcast receiver in the embodiment automatically registers a shared folder of the NAS connected to the LAN; and
FIG. 48 is a flow chart showing an example of an operation in which the digital television broadcast receiver in the embodiment automatically registers a shared folder of a NAS connected to a NAS exclusive port of the LAN.

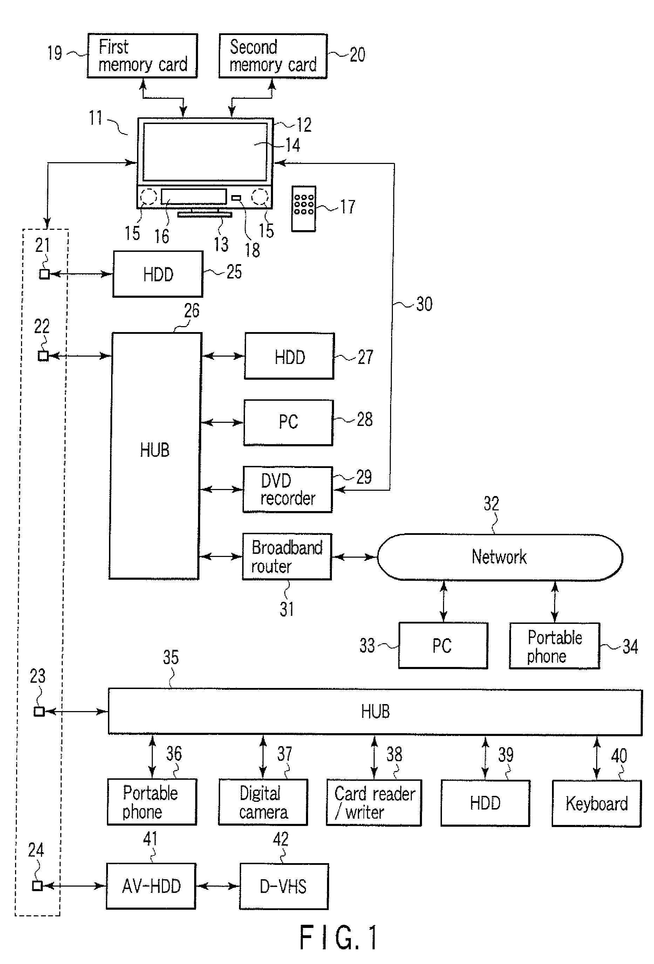

Hereinafter, one embodiment of the present invention will be described with reference to the accompanying drawings. FIG. 1 schematically depicts an appearance of a digital television broadcast receiver 11 explained in this embodiment and an example of a network system mainly composed of the digital television broadcast receiver 11.

That is, the digital television broadcast receiver 11 is mainly composed of a thin cabinet 12 and a support base 13 which supports the cabinet 12 in an erected manner. At the cabinet 12, there are installed: a flat panel type picture display device 14 including, for example, a liquid crystal display panel or the like, a speaker 15, an operating section 16, a light receiving section 18 which receives operational information transmitted from a remote controller 17, and the like.

In addition, a first memory card 19 such as, for example, a secure digital (SD) memory card, a multimedia card (MMC), and a memory stick can be removably mounted on the digital television broadcast receiver 11. Information such as a program or a photo is recorded in and reproduced from the first memory card 19.

Further, a second memory card (IC card) 20 having, for example, contract information or the like recorded therein can be removably mounted on the digital television broadcast receiver 11, and information is recorded in and reproduced from the second memory card.

The digital television broadcast receiver 11 also comprises a first local area network (LAN) terminal 21, a second LAN terminal 22, a universal serial bus (USB) terminal 23, and an i.Link terminal 24.

Among them, the first LAN terminal 21 is used as a LAN compatible HDD exclusive port. Thus, the first LAN terminal is used to record and reproduce information via the Ethernet (registered trademark) in and from a LAN compatible HDD 25 which is a connected network attached storage (NAS).

In this way, the first LAN terminal 21 is provided as a LAN compatible HDD exclusive port, whereby program information recording based on a high vision image quality can be stably carried out for the HDD without being affected by another network environment, a network use state and the like.

The second LAN terminal 22 is used as a general LAN compatible port using the Ethernet (registered trademark). The second LAN terminal is used to connect devices such as a LAN compatible HDD 27, a personal computer (PC) 28, and an HDD built-in digital versatile disk (DVD) recorder via, for example, a hub 26, and to transmit information to these devices.

With respect to the DVD recorder 29, digital information communicated via the second LAN terminal 22 is information oriented to only a control system. Thus, there is a need for providing a specific analog transmission channel 30 in order to transmit an analog picture and voice information to the digital television broadcast receiver 11.

Further, this second LAN terminal 22 is used to make connection to a network 32 such as, for example, the Internet via a broadband router 31 connected to the hub 26 and to transmit information to the PC 33 or a portable phone 34 via the network 32.

In addition, the above USB terminal 23 is used as a general USB compatible port. The USB terminal is used to connect USB devices such as a portable phone 36, a digital camera 37, a card reader/writer 38 for a memory card, an HDD 39, and a keyboard 40 via, for example, a hub 35, and to transmit the information to these USB devices.

Further, the above i.Link terminal 24 is used to serially connect, for example, an AV-HDD 41, a D-VHS (Digital-Video Home System) 42 and the like and transmit information to these devices.

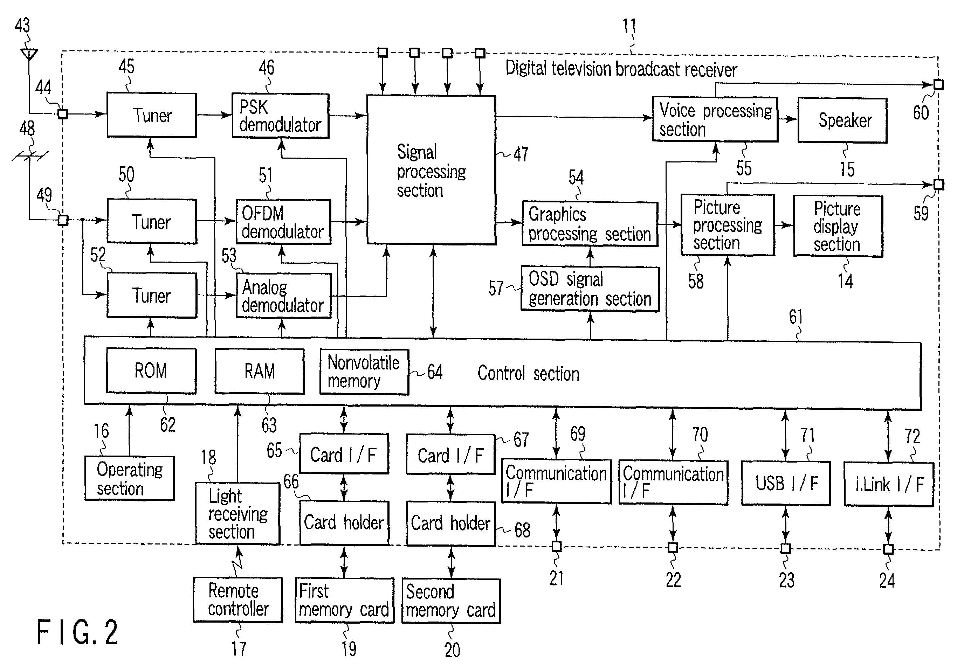

FIG. 2 shows a main signal processing system of the above-described digital television broadcast receiver 11. That is, a satellite digital television broadcast signal received by an antenna 43 for receiving a BS/CS digital broadcast is supplied to a tuner 45 for satellite digital broadcasting via an input terminal 44, whereby a broadcast signal of a desired channel is channel-selected.

Then, the broadcast signal which has been channel-selected by the tuner 45 is supplied to a phase shift keying (PSK) demodulator 46, the supplied signal is demodulated to a digital picture signal and a digital voice signal, and then, the demodulated signals are outputted to a signal processing section 47.

A terrestrial digital television broadcast signal received by an antenna 48 for receiving a terrestrial broadcast is supplied to a tuner 50 for terrestrial digital broadcasting via an input terminal 49, whereby a broadcast signal of a desired channel is channel-selected.

Then, the broadcast signal which has been channel-selected by the tuner 50 is supplied to an orthogonal frequency division multiplexing (OFDM) demodulator 51, the supplied signal is demodulated to a digital picture signal and a digital voice signal, and then, the demodulated signals are outputted to the above signal processing section 47.

A terrestrial analog television broadcast signal received by the antenna 48 for receiving a terrestrial broadcast is supplied to a tuner 52 for terrestrial analog broadcasting via the input terminal 49, whereby a broadcast signal of a desired channel is channel-selected. Then, the broadcast signal which has been channel-selected by the tuner 52 is supplied to an analog demodulator 53, the supplied signal is demodulated to an analog picture signal and a voice signal, and then, the demodulated signals are outputted to the above signal processing section 47.

Here, the signal processing section 47 selectively applies predetermined digital signal processing to the digital picture signal and digital voice signal supplied from each of the PSK demodulator 46 and OFDM demodulator 51, and outputs the processed signals to a graphic processing section 54 and a voice processing section 55.

In addition, a plurality of (illustrated four) input terminals 56a, 56b, 56c, 56d are connected to the above signal processing section 47. These input terminals 56a to 56d can receive an analog picture signal and an analog voice signal from the outside of the digital television broadcast receiver 11, respectively.

Then, the signal processing section 47 selectively digitizes the analog picture signal and analog voice signal supplied from the above analog demodulator 53 and each of the input terminals 56a to 56d; applies predetermined digital signal processing to the digitized picture signal and voice signal; and then, outputs the processed signals to the graphic processing section 54 and the voice processing section 55.

Among them, the graphic processing section 54 has a function of superimposing an OSD signal generated by an on-screen-display (OSD) signal generator section 57 on a digital picture signal supplied from the signal processing section 47 and outputting these signals. The graphic processing section 54 can selectively output an output picture signal of the signal processing section 47 and an output OSD signal of the OSD signal generator section 57, and can output both of the outputs in combination so as to configure a half of a screen, respectively.

Then, the digital picture signal outputted from the graphic processing section 54 is supplied to a picture processing section 58. The picture processing section 58 converts the inputted digital picture signal to an analog picture signal in a format which can be displayed by the picture display device 14. Then, the converted signal is outputted to the picture display device 14 so as to display it as a picture, and the picture is guided to the outside via an output terminal 59.

In addition, the above voice processing section 55 converts the inputted digital voice signal to an analog voice signal in a format which can be reproduced by the speaker 15. Then, the converted signal is outputted to the speaker 15, the outputted signal is reproduced as a voice, and the reproduced voice is guided to the outside via an output terminal 60.

Here, in the digital television broadcast receiver 11, all operations including the above-described variety of receiving operations are integrally controlled by a control section 61. The control section 61 has incorporated therein a central processing unit (CPU) or the like, although not shown. The control section 61 receives operational information from the operating section 16 or receives operational information sent out from the remote controller 17 via the light receiving section 18, thereby controlling each section such that its operational contents are reflected.

In this case, the control section 61 mainly utilizes: a read only memory (ROM) 62 having stored therein a control program executed by its CPU; a random access memory (RAM) 63 which provides a work area to the CPU; and a nonvolatile memory 64 in which a variety of setting information and control information are stored.

The CPU 61 is also connected to a card holder 66 capable of mounting the first memory card 19 via a card interface (I/F) 65. In this way, the control section 61 can transmit information to the first memory card 19 mounted on the card holder 66, via the card I/F 65.

Further, the control section 61 is connected to a card holder 68 capable of mounting the second memory card 20 via a card I/F 67. In this way, the control section 61 can transmit information via the card I/F 67 to the second memory card 20 mounted on the card holder 68.

The control section 61 is also connected to the first LAN terminal 21 via a communication I/F 69. In this way, the control section 61 can transmit information via the communication I/F 69 to the LAN compatible HDD 25 connected to the first LAN terminal 21. In this case, the control section 61 has a dynamic host configuration protocol (DHCP) server function (not shown), assigns an internet protocol (IP) address to the LAN compatible HDD 25 connected to the first LAN terminal 21, and makes control.

Further, the control section 61 is connected to the second LAN terminal 22 via a communication I/F 70. In this way, the control 61 can transmit information via the communication I/F 70 to each device (refer to FIG. 1) connected to the second LAN terminal 22.

Furthermore, the control section 61 is connected to the USB terminal 23 via a USB I/F 71. In this way, the control 61 can transmit information via the USB I/F 71 to each device (refer to FIG. 1) connected to the USB terminal 23.

Moreover, the above control section 61 is connected to the i.Link terminal 24 via an i.Link I/F 72. In this way, the CPU 61 can transmit information via the i.Link I/F 72 to each device (refer to FIG. 1) connected to the i.Link terminal 24.

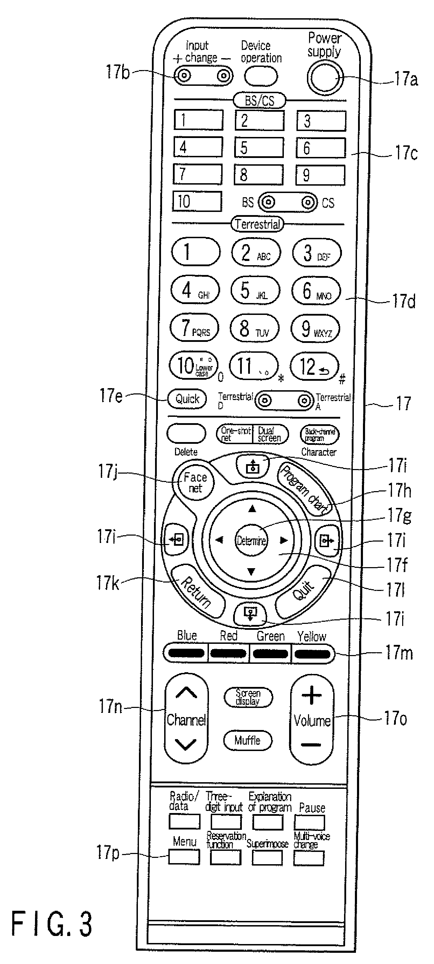

FIG. 3 shows an appearance of the remote controller 17. In the remote controller 17, there are mainly provided: a power supply key 17a, input change keys 17b, direct channel selection keys 17c for satellite digital broadcast channels, direct channel selection keys 17d for terrestrial broadcast channels, a quick key 17e, cursor keys 17f, an [OK] key 17g, a program chart key 17h, page change keys 17i, a face net (navigation) key 17j, a return key 17k, an quit key 171, blue, red, green, and yellow color keys 17m, channel up and down keys 17n, a volume control key 17o, a menu key 17p, and the like.

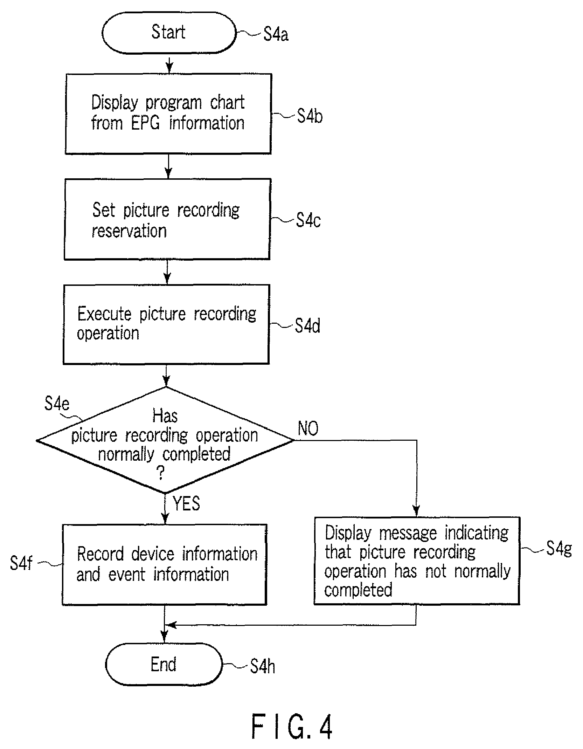

FIG. 4 shows a flow chart illustrating an operation in which the digital television broadcast receiver 11 records a program in a digital picture recorder from among the devices connected to the terminals 21 to 24.

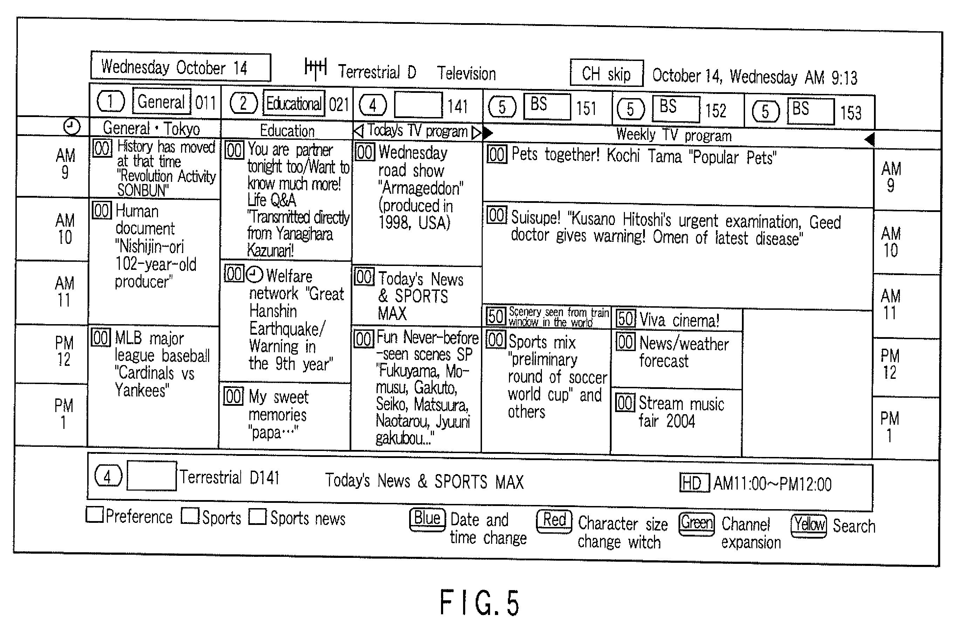

That is, when program picture recording is requested, whereby processing is started (in step S4a), the control section 61 causes the picture display device 14 to display a program chart as shown in FIG. 5 based on electronic program guide (EPG) information which is program information acquired in advance via a broadcast signal or a network in step S4b.

Then, a user executes picture recording reservation setting for a desired program based on the displayed program chart in step S4c. In this picture recording reservation setting, a program to be recorded is selected from the program chart, and a digital picture recorder for recording that program is selectively set.

In the case where the picture recording reservation setting time has reached in step S4d, the control section 61 executes an picture recording operation so as to record a reservation set program in a reservation set digital picture recorder.

Thereafter, the control section 61 determines whether or not the program picture recording operation has normally completed in step S4e. In the case where the determination result is affirmative (YES), the control section records device information for specifying a digital picture recorder having carried out picture recording (a device ID, a device name, a shared folder name and the like) and event information relating to that image recorded program (an event ID, a channel number, a title, a description, a genre, a picture recording range, an image quality mode and the like) in the nonvolatile memory 64 in step S4f, and terminals processing (in step S4h).

On the other hand, in the case where the determination result is negative in the step S4e (NO), the control section 61 causes the picture display device 14 to display a message indicating that the program picture recording operation has not normally completed in step S4g, and terminals processing (in step S4h).

By making the above picture recording operation, the user arbitrarily selects a plurality of digital picture recorders connected to the terminals 21 to 24 of the digital television broadcast receiver 11, thereby making it possible to recording a program.

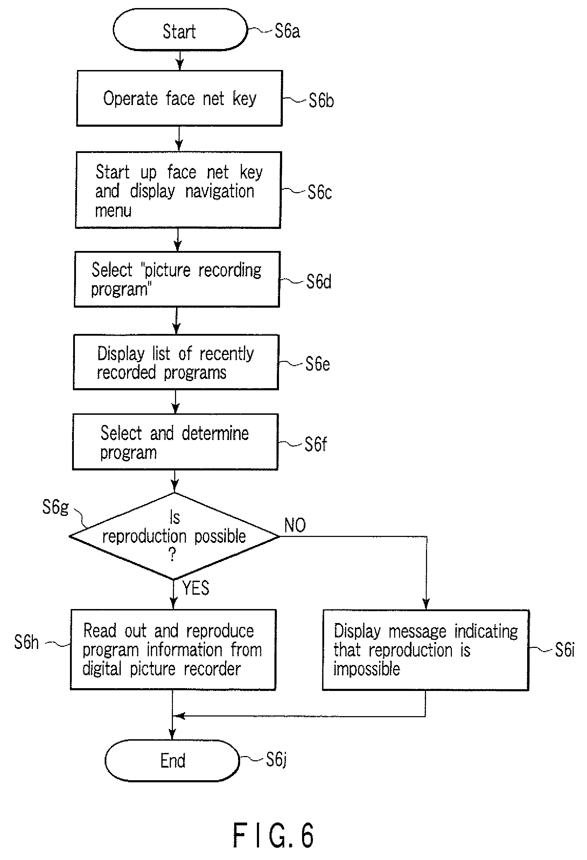

FIG. 6 shows a flow chart for explaining an operation for speedily searching and reproducing a desired program from among a variety of programs recorded in a plurality of digital picture recorders, by making the above picture recording operation. That is, when processing is started (in step S6a), the user operates the face net key 17j of the remote controller 17 in step S6b.

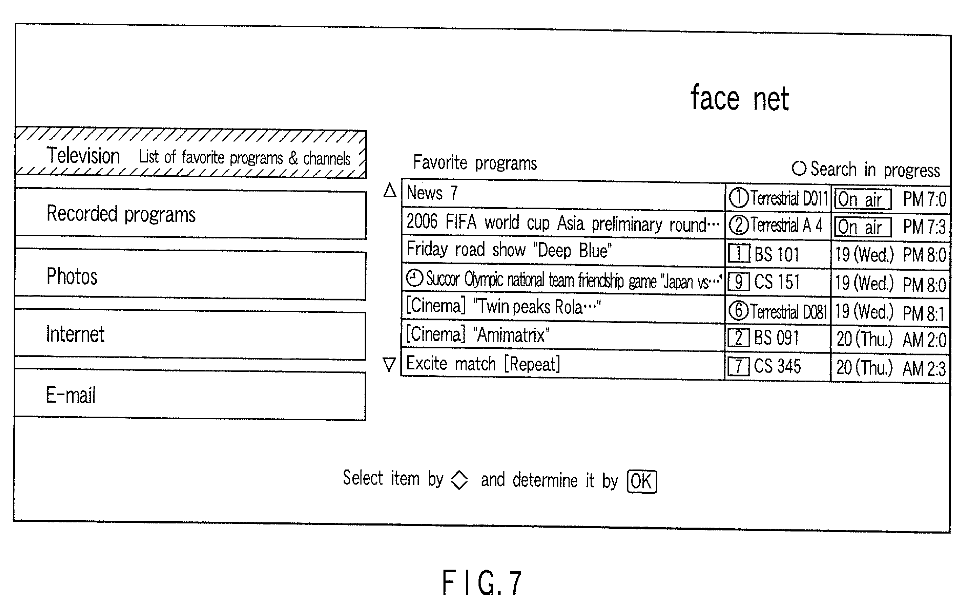

Then, the control section 61 starts up the face net (navigation) in step S6c, and causes the picture display device 14 to display a navigation menu as shown in FIG. 7. On the navigation menu, five items "television", "recorded programs", "photograph", "Internet", and "E-mail" are selectively provided. The selected item is displayed to be highlighted on the screen in order to discriminate it from other items. FIG. 7 shows a state in which "television" has been selected, by way of hatching.

Here, in step S6d, the user operates the cursor keys 17f of the remote controller 17 to select an item "recorded programs". Then, the control section 61 enters a state in which the item "recorded programs" has been selected, as shown in FTG. 8 by way of hatching.

In the state in which the item "recorded programs" has been selected, a picture which can be displayed in this item "recorded programs", namely, part of a picture indicating a list of the recently recorded programs is displayed on the same screen as the navigation menu.

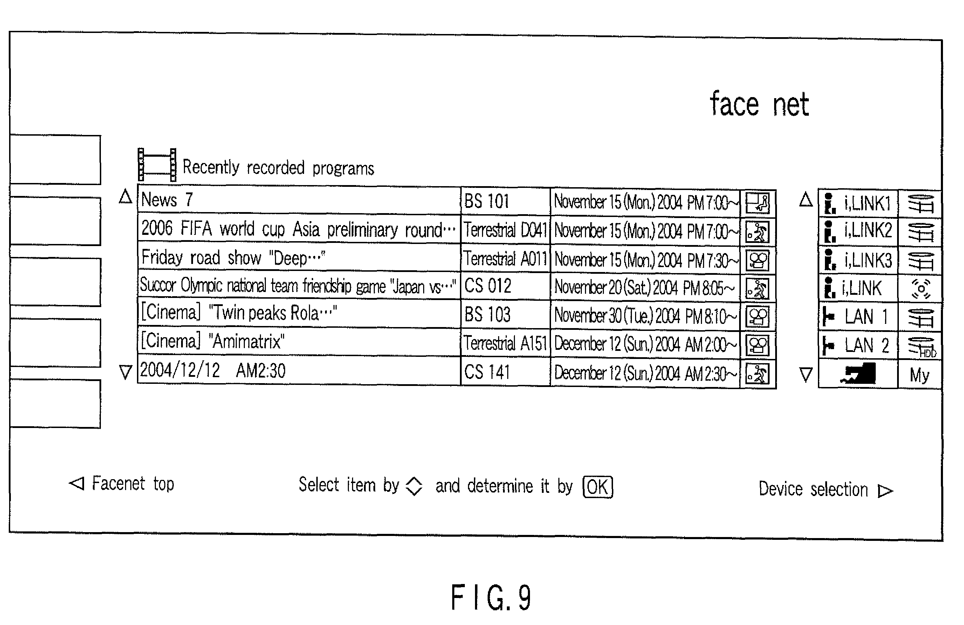

When, in this state, the user operates the [OK] key 17g of the remote controller 17 in step S6e, the control section 61 controls the picture display device 14 to display all the listings of the recently recorded programs, as shown in FIG. 9. In the program listings, titles, broadcast channels, recording date and time, day of the week, time, genre and the like are displayed as information indicating the recorded programs.

The list of the recently recorded programs is produced by referring to device information for specifying a digital picture recorder having carried out picture recording and event information relating to the recorded programs, the items of information being recorded in the nonvolatile memory 64 during reserved picture recording of the programs described in FIG. 4.

In the list of the recently recorded programs, it is possible to display a list of information indicating a preset predetermined number of programs (for example, a maximum of 35 programs) dating back from the most recently recorded program regardless of the digital picture recorder having carried out picture recording. In FIG. 9, although seven programs are displayed as a list, it becomes possible to look a list of all the programs by scrolling the display by operating the cursor keys 17f. In addition, it is possible to change seven programs displayed as a list to be fully skipped by operating the page change keys 17i of the remote controller 17.

When, in step S6f, the user operates the cursor keys 17f of the remote controller 17 from the list of the recently recorded programs to select information indicating a desired program, and operates the [OK] key 17g to determine the selected information, the control section 61 specifies a digital picture recorder having the selected and determined program recorded therein and determines whether or not that program can be reproduced, based on the information recorded in the nonvolatile memory 64 in step S6g.

This determination is made as to whether or not the digital television broadcast receiver 11 is connected to the digital picture recorder having recorded therein a program requested for reproduction; whether or not the digital picture recorder having recorded therein the program requested for reproduction has been powered ON; and whether or not that program is recorded in the target digital picture recorder, by comprehensively comparing conditions during picture recording and reproduction.

In the case where the determination result is affirmative in the step S6g (YES), the control section 61 makes control so as to read out and reproduce information on the program requested for reproduction from the targeted digital picture recorder in step S6h, and terminates processing (in step S6j).

On the other hand, in the case where the determination result is negative in the step S6g (NO), the control section 61 causes the picture display device 14 to display a message indicating that the requested program cannot be reproduced in step S6i, and terminals processing (in step S6j).

According to the above-described reproducing operation, the navigation function is provided which is capable of displaying a preset predetermined number of recorded programs as a list, dating back from the most recently recorded program regardless of the digital picture recorder having carried out picture recording, thus making it possible for the user to easily manage the programs recorded in a plurality of digital picture recorders. Thus, a desired program is selected from the programs displayed as a list by the cursor keys 17f, and the selected program is determined by the [OK] key 17g, thereby making it possible to speedily search and reproduce the determined program.

Displaying as a list all the programs recorded in a plurality of digital picture recorders becomes impractical in consideration of an increased number of digital picture recorders to be connected or an increased number of programs recorded. As in the present embodiment, displaying as a list a preset predetermined number of programs dating back from the most recently recorded programs (for example, a maximum of 35 programs) becomes settings suitable to practical use in which no substantial program hardly occurs from the standpoint of the user.

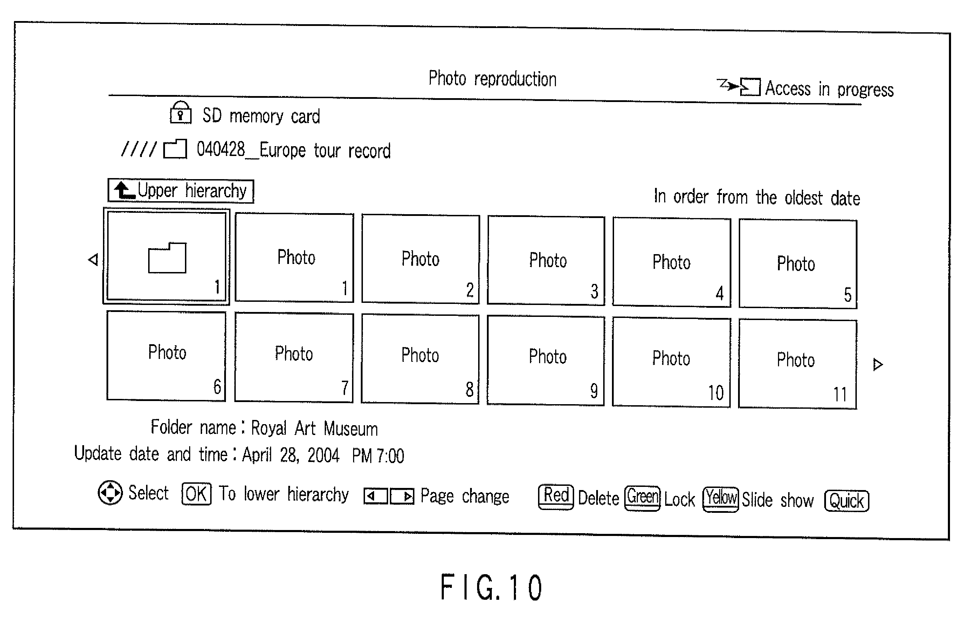

Here, the above-described digital television broadcast receiver 11 has a photo reproducing function. That is, an item "photo" is selected and determined from the navigation menu shown in FIG. 7, the menu being displayed by operating the face net key 17j of the remote controller 17, whereby, for example, a plurality of photos can be displayed as a list, the photos being recorded in an SD memory card which is the first memory card 19 mounted on the card holder 66. In this case, there is a need for the user to specify a digital recording medium or a digital picture recorder (digital camera) having recorded therein a photo targeted for display. As a result, a list of photos as shown in FIG. 10 is displayed.

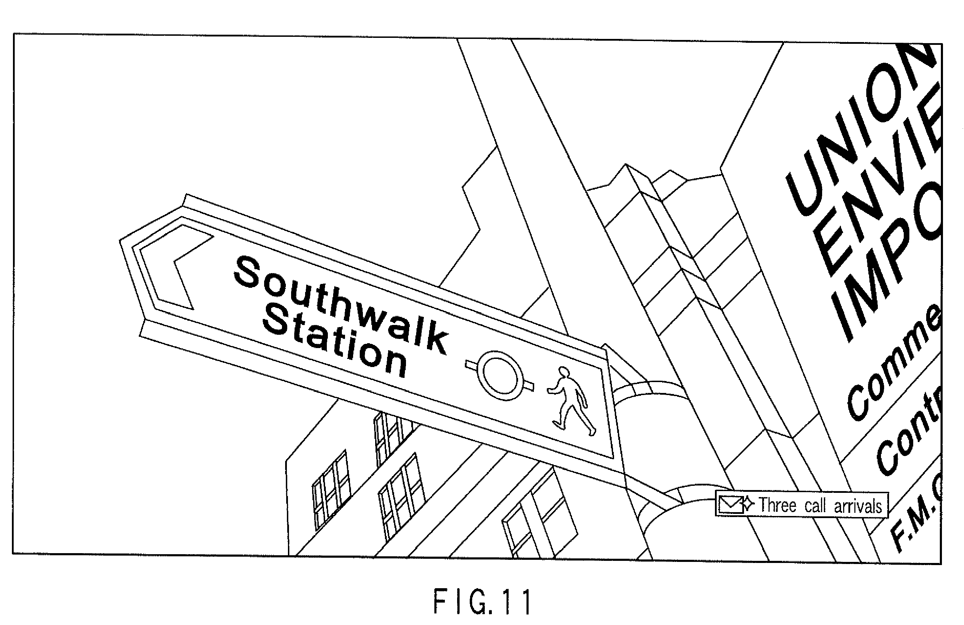

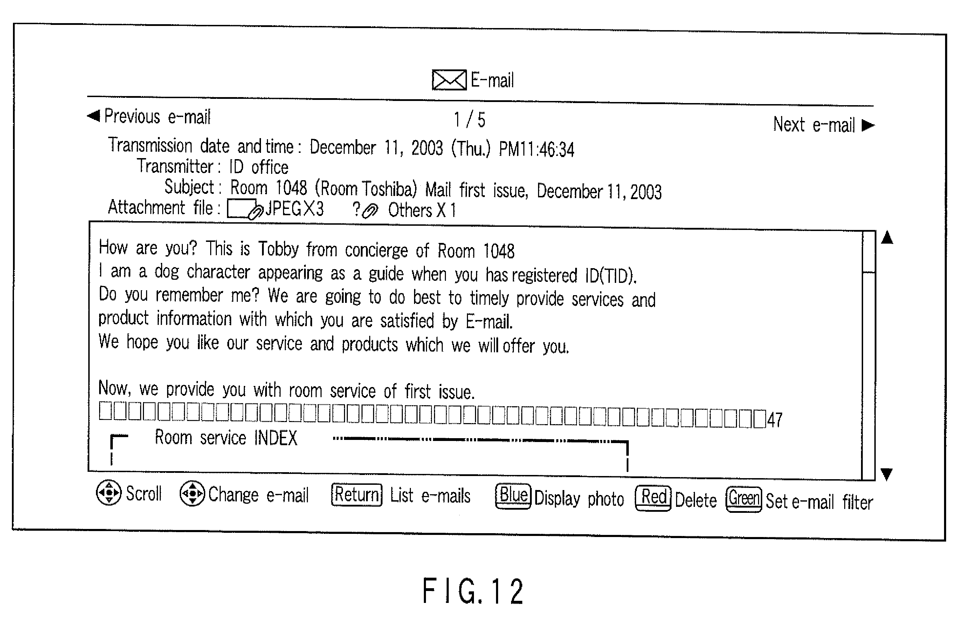

When the digital television broadcast receiver 11 determines a call arrival state of E-mail periodically for a server (not shown) to which PC 28 and PC 33 are connected and a call arrival occurs, the receiver can display a call arrival message such as "three call arrivals" on the display screen of the picture display device 14, as shown in FIG. 11. In a state in which a call arrival message is displayed, E-mail can be opened on the picture display device 14, as shown in FIG. 12, merely by operating the [OK] key 17g of the remote controller 17.

Also, transmission of E-mail or readout of called E-mail can be carried out to or from the server by selecting and determining an item "E-mail" from the navigation menu shown in FIG. 7.

Further, the picture displayed on the screen of the picture device 14 can be changed on a page by page basis by operating the page change keys 17i of the remote controller 17. That is, there are four cursor keys 17f of the remote controller 17 which correspond to the upward and downward directions and the left and right directions in order to move upwardly and downwardly and to the left and right on the screen. There are also four page change keys 17i which are compatible with the four cursor keys 17f, respectively.

Namely, for example, a current display screen is changed to a picture which exists at its upper side, by operating the page change key 17i corresponding to the cursor keys 17f for moving a cursor in an upward direction. By the page changing function, it becomes possible to speedily select a desired screen, as compared with scrolling a screen by operating the cursor keys 17f.

In addition, the page change keys 17i are installed to be associated with the cursor keys 17f, thus making it possible to easily recognize moving directions. The screen which can be changed by the page change keys 17i includes, for example, a program chart shown in FIG. 5 and a list of the recently recorded programs shown in FIG. 9.

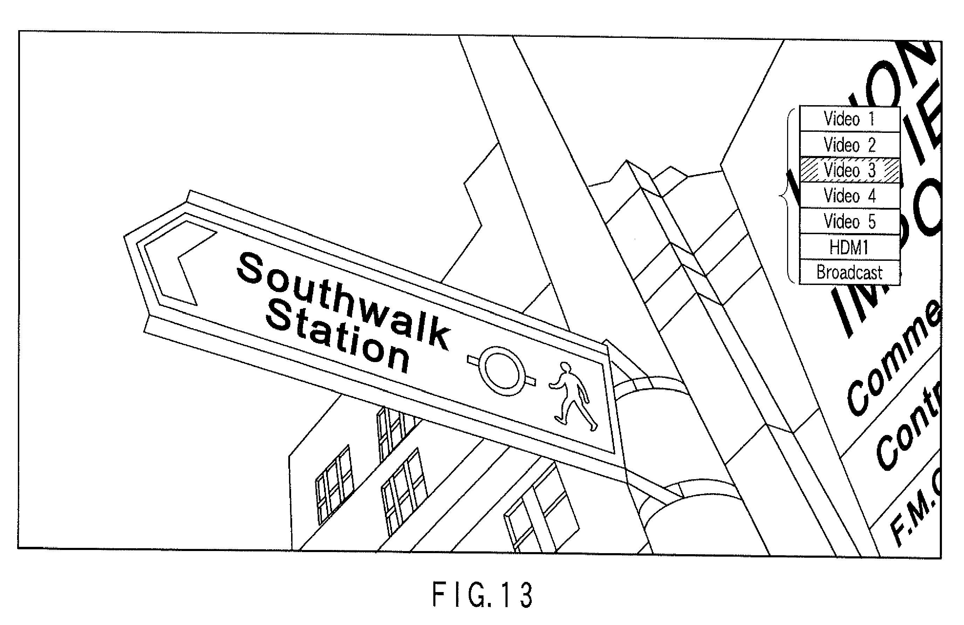

Further, the input change keys 17b of the above remote controller 17 are keys for changing analog system video input terminals, and can be selectively operated for the positive and negative sides. The change state of the video input terminal is OSD-displayed on the display screen of the picture display device 14, as shown in FIG. 13.

When the input change key 17b is operated to the positive side, the input is recursively changed in the forward direction like video 1 → video 2 → video 3 → video 4 → video 5 → HDMI (High Definition Multimedia Interface) → Broadcast → Video 1. On the other hand, the input change key 17b is operated to the negative side, the input is recursively changed in the backward direction like broadcast → HDMO → Video 5 → Video 4 → Video 3 → Video 2 → Video 1 → Broadcast. Conventionally, only recursive change in the forward direction can be carried out, thus causing the user to feel inconvenience. However, operability can be improved by adding the recursive change in the backward direction.

In the video input change by the input change keys 17b, there is employed a so-called precedent input system in which only an OSD display is changed in a state in which the input change key 17b is continuously operated to be pressed, and a screen is changed by stopping operation for a predetermined period of time. This eliminates the inconvenience that the screen is changed every time the input change key 17b is operated.

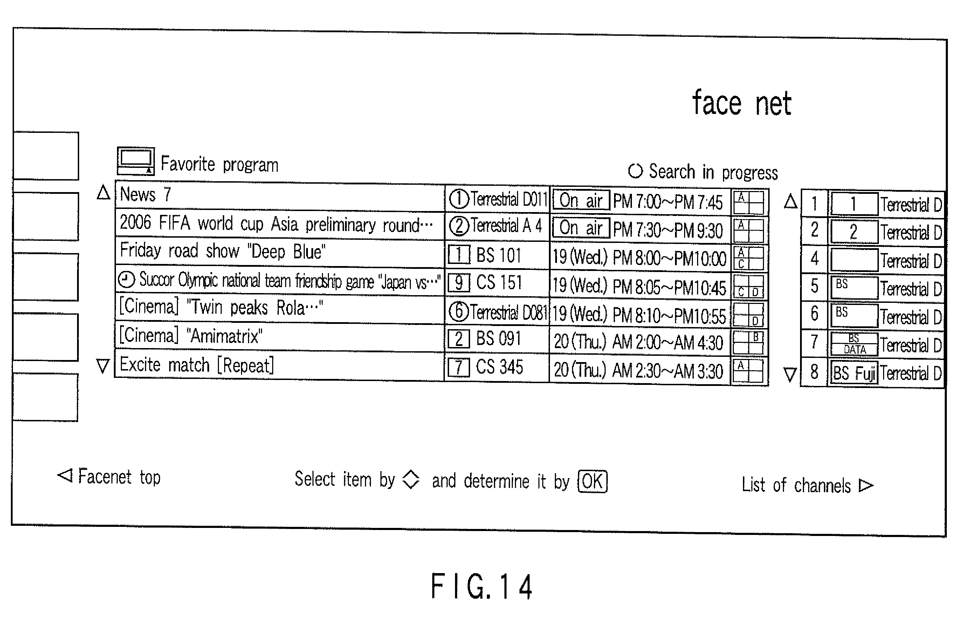

Moreover, in this digital television broadcast receiver 11, the user inputs program search conditions (favorite information) including a plurality of search conditions such as a channel, a genre, and a keyword, thereby automatically searching programs which meet the program search conditions from the inputted time point to one week later and display a list of favorite programs on a screen, as shown in FIG. 14. It is also possible to select a specific program from the list of favorite programs, thereby setting picture recording reservation.

An item "television" on the navigation menu shown in FIG. 7 is selected by the cursor keys 17f, and then, the selected item is determined by the [OK] key 17g, whereby the list of favorite programs is displayed. In searching the favorite program, it is possible to set four types of program search conditions A to D each including three search conditions of a channel, a genre, and a keyword.

For example, in program search condition A, it is possible to set the genre to "soccer", the keyword to "world", and the channel to "N television channel". In program search condition B, it is possible to set the genre to "baseball", the keyword to "Japan", and the channel to "J television channel". The favorite program listings, as shown in the right side column from the list of favorite programs shown in FIG. 14, indicates which of the program search conditions A to D is used for each of the searched programs. A plurality of conditions A to D are displayed for the programs which meet the plurality of program search conditions A to D.

While the above favorite program search operation has described that the programs meeting the favorite program search conditions A to D are searched from the programs to be broadcast, it is also possible to search the programs which meet the favorite program search conditions A to D as long as program information capable of producing an electronic program chart can be acquired for the programs distributed via, for example, CATV or a network.

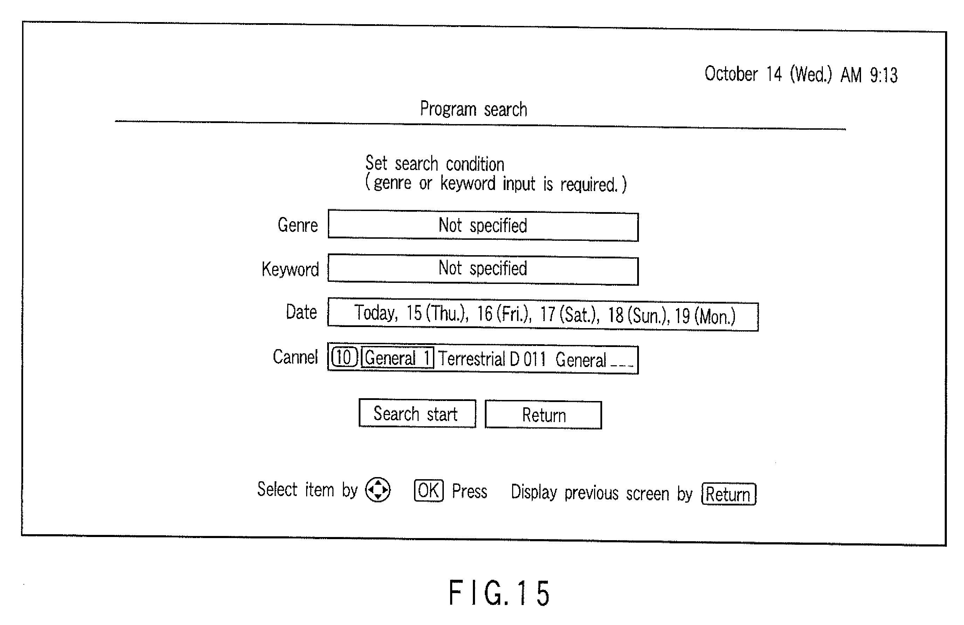

In addition, the digital television broadcast receiver 11 displays a program search screen as shown in FIG. 15 by operating the yellow color key 17m of the remote controller 17 in a state in which the program chart shown in FIG. 15 is displayed. On the program search screen, programs from the inputted time point to one week later can be automatically searched and displayed as a list by inputting four search conditions of a genre, a keyword, a date, and a channel.

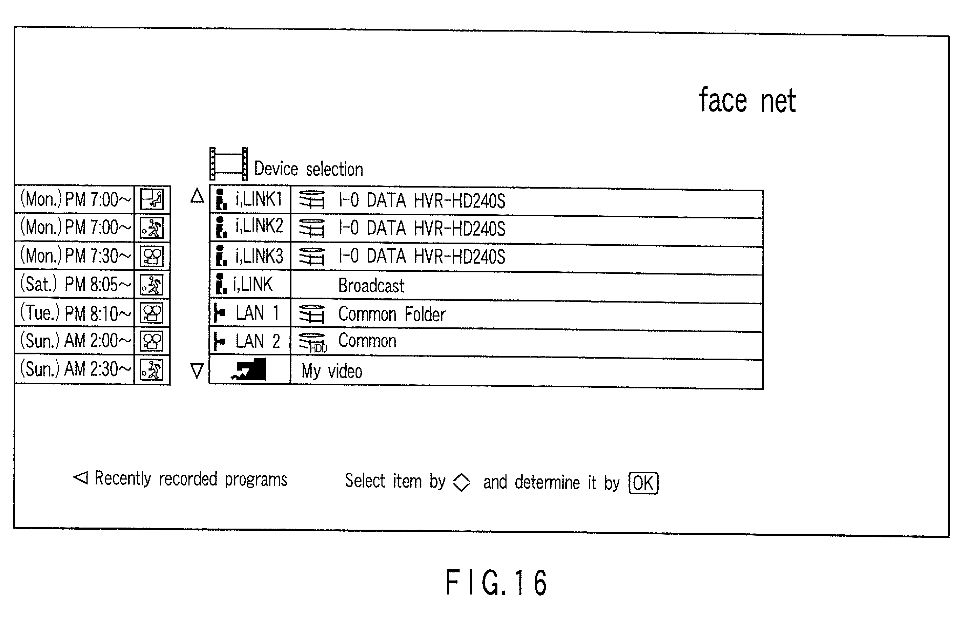

Further, the digital television broadcast receiver 11 can display a screen listing connected devices, as shown in FIG. 16, by scrolling the right screen in the list of the recently recorded programs shown in FIG. 9. On the screen listing the connected devices, all the devices connected to the terminals 21 to 24 can be displayed in the listing (however, in the case where the broadband router 31 is connected, the corresponding device(s) can be displayed as a list.)

In the list of devices, LAN 1 compatible with the first LAN terminal 21 is provided with an icon which indicates that the LAN is a LAN compatible HDD exclusive port, and LAN 2 compatible with the second LAN terminal 22 is displayed with an icon which indicates that the LAN is a general LAN compatible port.

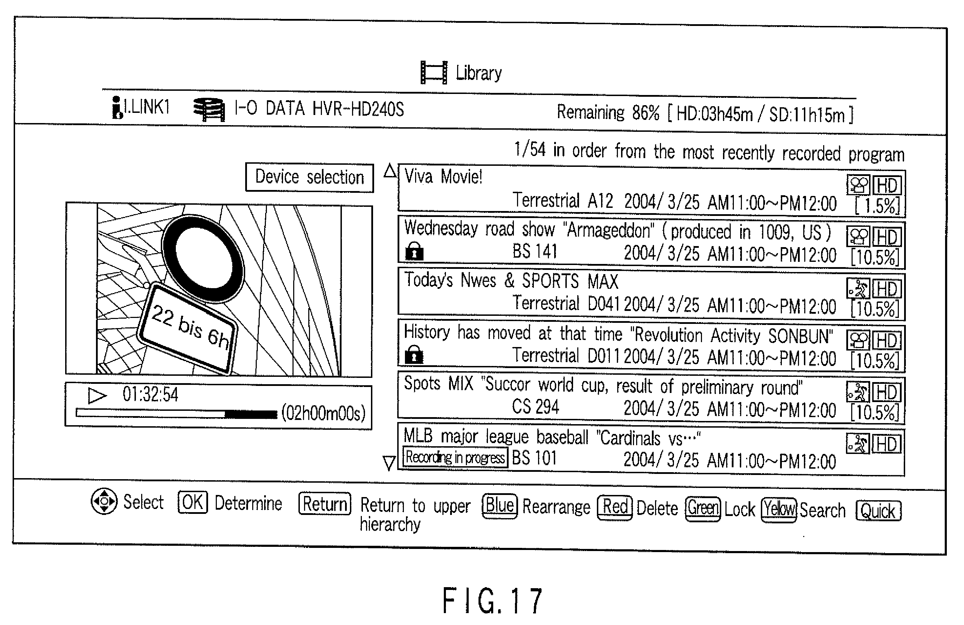

When a desired digital picture recorder (the AV-HDD 41 in this case) is selected by the cursor keys 17f from the list display screen of the connected devices, and the selected device is determined by the [OK] key 17g, a list of the programs recorded in the selected and determined digital picture recorder (AV-HDD 41) is displayed as a library, as shown in FIG. 17.

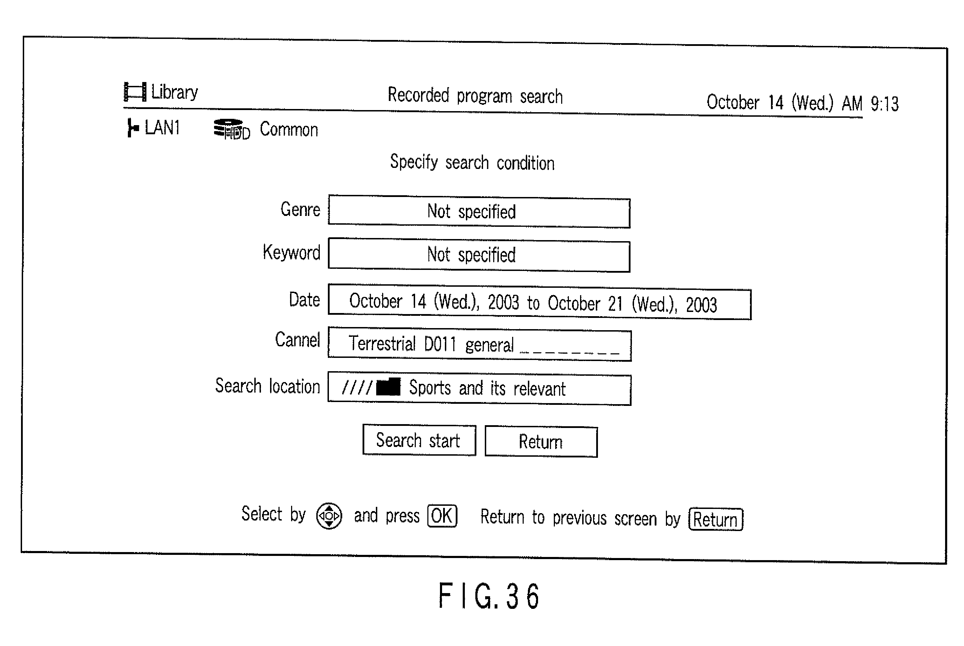

In addition, when the yellow color key 17m of the remote controller 17 is operated in a state in which the library screen is displayed, a recorded program search screen as shown in FIG. 36 described later is displayed. Then, when four search conditions of a genre, a keyword, a date, and a channel are inputted on the recorded program search screen, programs meeting the search conditions are searched from among the programs recorded in the selected and determined digital picture recorder (AV-HDD 41), and the searched programs are displayed as a list.

Now, a description will be given with respect to a reservation function of the digital television broadcast receiver 11. There are two types of reservation functions: a program specifying reservation of making a reservation by specifying a program to be broadcast and a date-and-time specifying reservation of making a reservation by specifying a channel and a date and time.

In addition, the program specifying reservation includes: a picture recording reservation of recording a specified program in a recording medium such as a picture recorder or a memory card; and a viewing reservation of making only a channel selection of a specified program. Further, the date-and-time specifying reservation includes: a picture recording reservation of recording the broadcast contents of a specified channel and a date and time in a recording medium such as a specified picture recorder or memory card; and a viewing reservation of making only a channel selection of the broadcast of a specified channel and a date and time.

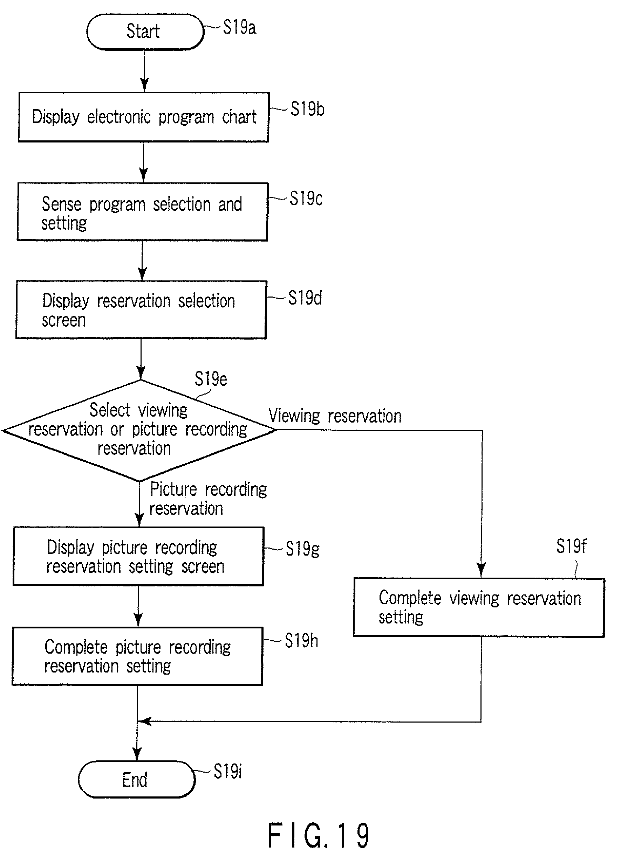

FIG. 19 shows a flow chart for explaining an operation for setting a program specifying reservation in the above-described digital television broadcast receiver 11. This operation is started (in step S19a) in such a manner that the user operates the program chart key 17h of the remote controller 17.

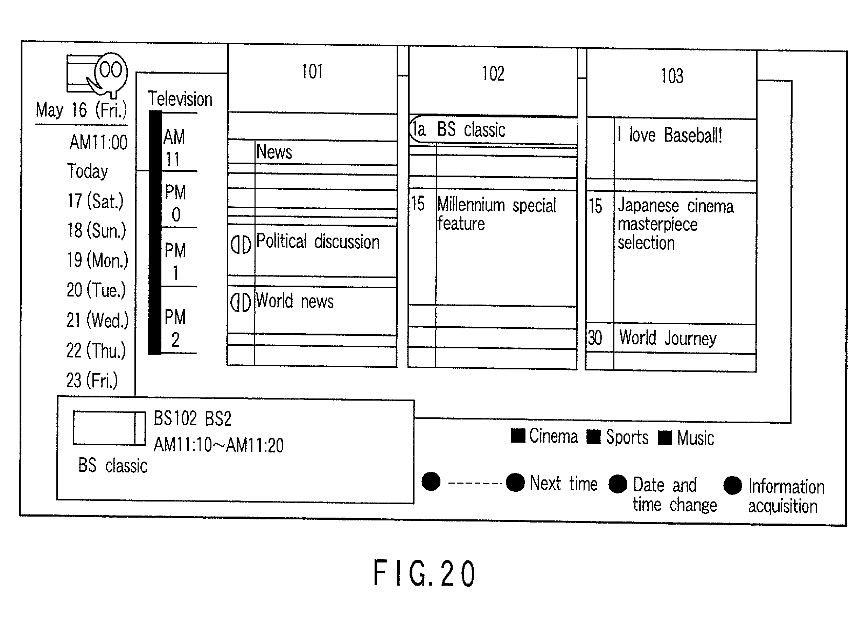

Then, the control section 61 causes the picture display device 14 to display an electronic program chart as shown in FIG. 20, based on EPG information acquired in advance from the broadcast signal in step S19b.

In this manner, the user can selectively set a desired program from the electronic program chart. This selective setting is executed by operating the cursor keys 17f of the remote controller 17 to select a desired program and operating the [OK] key 17g.

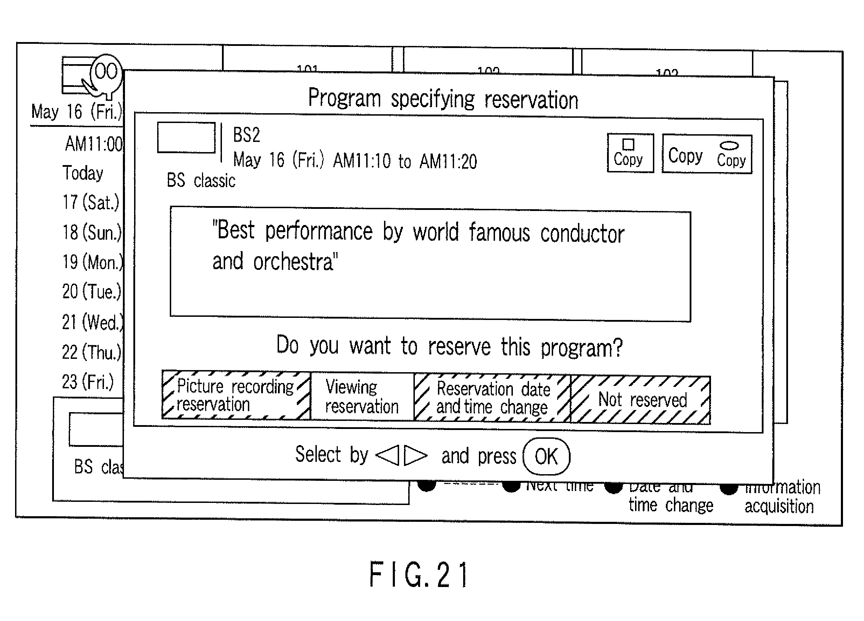

Thus, when the control section 61 senses that a desired program is selectively set from the electronic program chart in step S19c, the control section causes a reservation selection screen as shown in FIG. 21 to be displayed in step S19d.

The reservation selection screen displays a general description of a broadcast channel, a broadcast date, and contents of the program previously selected, so that the user can select a picture recording reservation or a viewing reservation. This selection is also executed by operating the cursor keys 17f of the remote controiler 17 to select the picture recording reservation or view reservation, and then, operating the [OK] key 17g.

Then, the control section 61 determines that either of the picture recording reservation and the viewing reservation has been selected in step S19e. In the case where it is determined that the viewing reservation has been selected, each item of information set for the viewing reservation is stored in the nonvolatile memory 64 and the viewing reservation setting is completed in step S19f, and processing is terminated (in step S19i). The viewing reservation is thus set, whereby the selected program is automatically channel-selected, and is provided for viewing.

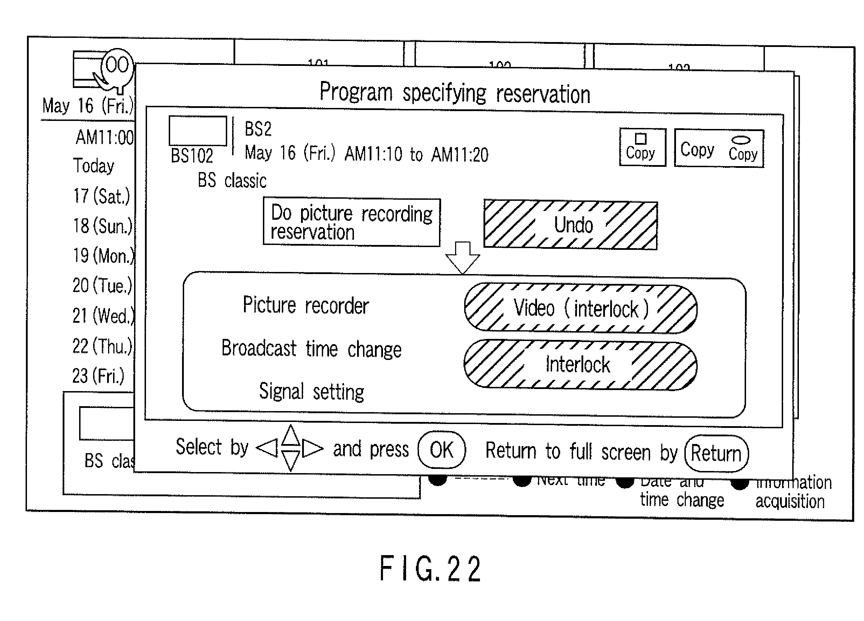

In addition, in the case where it is determined that the picture recording reservation has been selected in the step S19e, the control section 61 causes a picture recording reservation setting screen as shown in FIG. 22 to be displayed in step S19g. This picture recording reservation setting screen can make selection of whether or not to make a picture recording reservation of the previously selected and set program or can specify a digital picture recorder or a recording medium which carries out picture recording.

Then, in the case where a picture recording reservation is requested and a variety of required items are set on the picture recording reservation setting screen, the control section 61 stores each item of information set for the picture recording reservation in the nonvolatile memory 64, and completes the picture recording reservation setting in step S19h, and terminals processing (in step S19i). The picture recording reservation is thus set, whereby a selected program is automatically recorded in a specified digital picture recorder or recording medium.

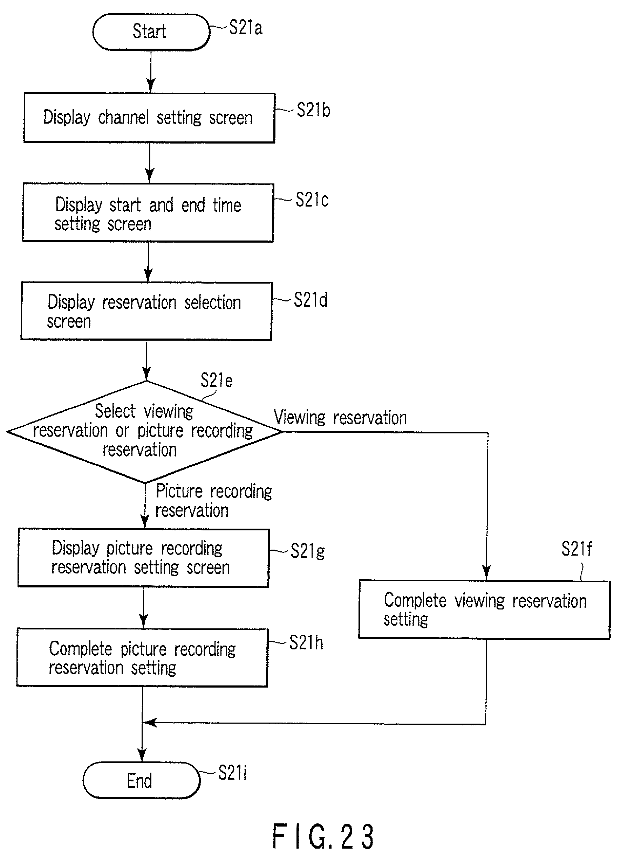

FIG. 23 shows a flow chart for explaining an operation for setting a date-and-time specifying reservation in the above-described digital television broadcast receiver 11. This operation is started (in step S21a) in such a manner that the user selects and sets an item of a date-and-time specifying reservation from a hierarchy of the set menus displayed on the video display device 14 by operating the menu key 17p of the remote controller 17.

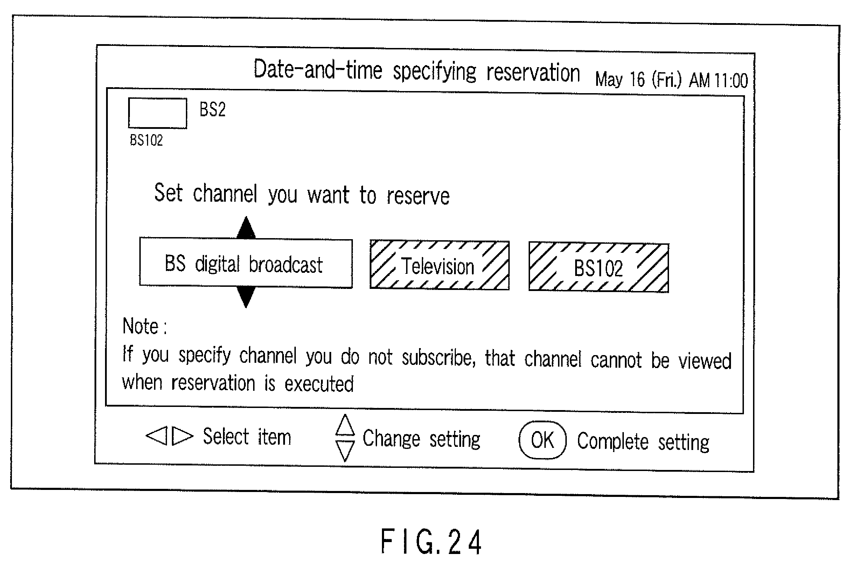

Then, the control section 61 causes a channel setting screen as shown in FIG. 24 to be displayed in step S21b. On the channel setting screen, the user can set a BS digital broadcast channel and a channel which belongs to a 110-degree CD digital broadcast.

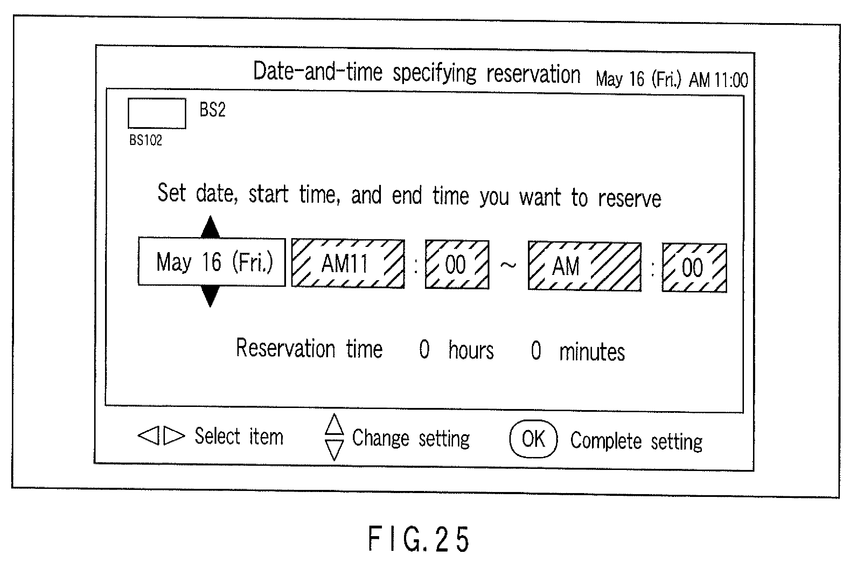

Then, when the control section 61 senses that a channel has been set on the channel setting screen, the control section causes a start and end time setting screen as shown in FIG. 25 to be displayed in step S21c. On the start and end time setting screen, the user can set a reservation date and a start time and an end time.

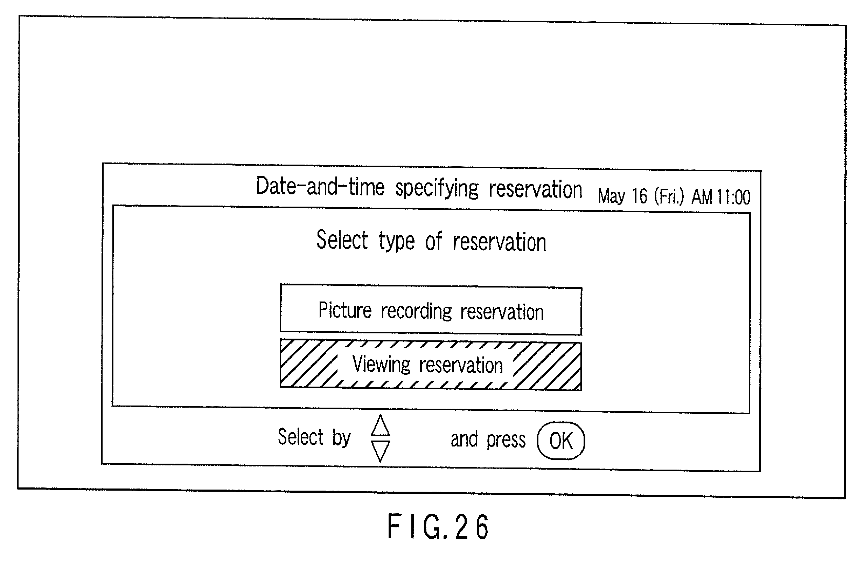

Thereafter, when the control section 61 senses that a required item has been set on the start and end time setting screen, the control section causes a reservation selection screen as shown in FIG. 26 to be displayed in step S21d. On the reservation selection screen, the user can select a picture recording reservation or a viewing reservation.

The control section 61 determines whether or not either of the picture recording reservation and the viewing reservation has been selected in step S21e. In the case where it is determined that the viewing reservation has been selected, the control section 61 stores each item of information set for the viewing reservation in the nonvolatile memory 64, and completes viewing reservation setting in step S21f; and terminates processing (in step S21i). The viewing reservation is thus set, whereby a broadcast of a specified channel and date and time is automatically channel-selected, and is provided for viewing.

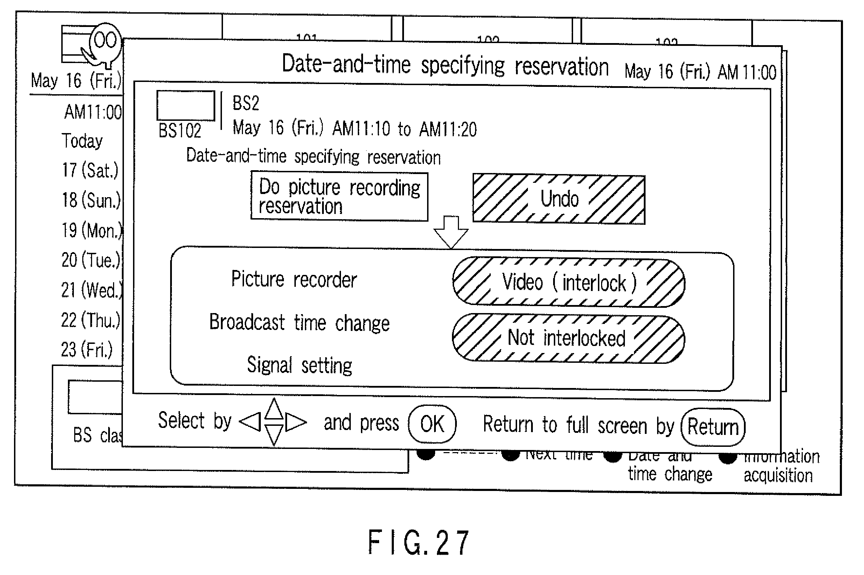

On the other hand, in the case where it is determined that the picture recording reservation has been selected in the step S21e, the control section 61 causes a picture recording setting screen as shown in FIG. 27 to be displayed in step S21g. On the picture recording reservation setting screen, the user can make a selection of whether or not to make the picture recording reservation and can specify a digital picture recorder or a recording medium which carries out picture recording.

In the case where the picture recording reservation is requested and a variety of required items are set on the picture recording reservation setting screen, the control section 61 stores each item of information set for the picture recording reservation in the nonvolatile memory 64 and completes picture recording reservation setting in step S21h; and terminates processing (step S2li). The picture recording reservation is thus set, whereby a broadcast of a specified channel and date and time is automatically recorded in a specified digital picture recorder or recording medium.

In addition, the digital television broadcast receiver 11 has a viewing program picture recording function capable of recording a currently viewed program by its end time by specifying a picture recorder or a recording medium.

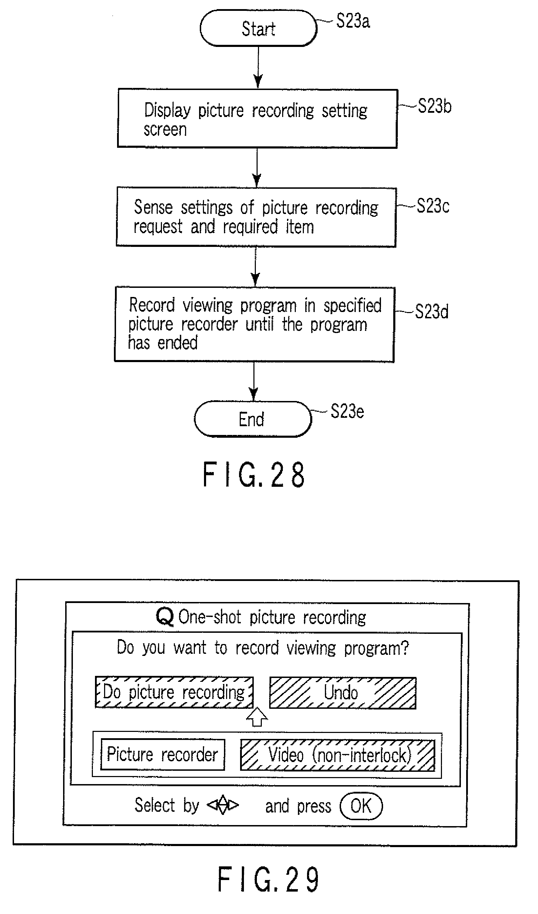

FIG. 28 shows a flow chart for explaining an picture recording operation using the viewing program picture recording function. This operation is started (in step S23a) in such a manner that the user selects and sets an item of viewing program picture recording from a quick menu displayed on the picture display device 14 by operating the quick key 17e of the remote controller 17.

Then, the control section 61 causes the picture display device 14 to display a picture recording setting screen as shown in FIG. 29 in step S23b. On the picture recording setting screen, the user can make a selection of whether or not to make picture recording or can specify a digital picture recorder or a recording medium which carries out picture recording.

In the case where the control section 61 senses that picture recording is requested and a variety of required items are set on the picture recording setting screen in step S23c, the control section causes a specified digital picture recorder or recording medium to record a currently selected channel by its end time in step S23d, and terminates processing (in step S23e).

With the above-described picture recording reservation function and viewing program picture recording function, the user arbitrarily selects a plurality of digital picture recorders connected to the terminals 21 to 24 of the digital television broadcast receiver 11, the first memory card 19 mounted on the card holder 66, or the like, thereby making it possible to record a program.

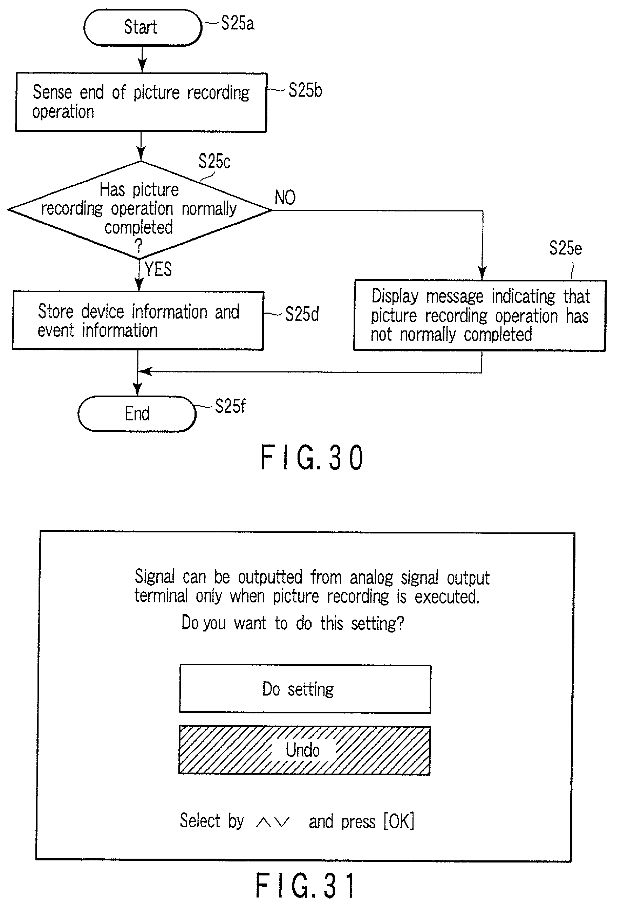

FIG. 30 shows a flow chart for explaining an operation after picture recording has been executed by the above-described picture recording reservation function and viewing program picture recording function. That is, when this operation is started (in step S25a), the control section 61 senses that the picture recording operation has terminated in step S25b, and determines whether or not the picture recording operation has normally completed in step S25c.

In the case where the determination result is affirmative (YES), the control section stores in the nonvolatile memory 64 device information for specifying a digital picture recorder or a recording medium having carried out picture recording (such as a device ID, a device name, and a shared folder name) and event information relating to that recorded program (such as an event ID, a channel number, a title, a description, a genre, a picture recording range, and an image quality mode); and terminates processing (in step S25f).

In the case where the picture recording operation has not normally completed in the step S25c (NO), the control section 56 causes the picture display device 14 to display a message indicating that the picture recording operation has not normally completed in step S25e, and terminates processing (in step S25f).

In addition, the digital television broadcast receiver 11 can set an analog picture signal and an analog voice signal so as to be outputted from the output terminals 59, 60 only when picture recording is executed in a specified digital picture recorder or recording medium.

This setting is executed in such a manner that the user selects an output setting screen as shown in FIG. 31 from a hierarchy of set menus displayed on the picture display device 14 by operating the menu key 17p of the remote controller 17, and then, selects an item "set" on the output setting screen.

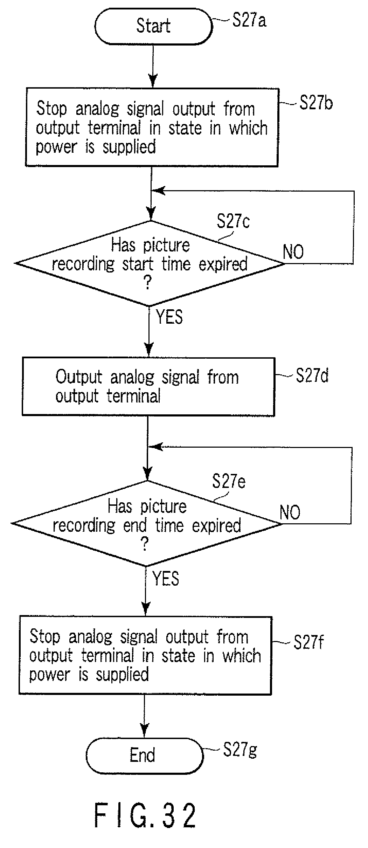

FIG. 32 shows a flow chart for explaining an operation during picture recording using the picture recording reservation function in the case where the above-described output setting is provided. When this operation is started (in step S27a), the control section 61 stops outputs of the analog picture signal and the analog voice signal from the output terminals 59, 60 in a state in which power is supplied, and, for example, any broadcast is channel-selected, and is provided for viewing in step S27b.

Then, the control section 61 determines whether or not a picture recording start time based on picture recording reservation has been reached in step S27c. In the case where the determination result is affirmative (YES), the control section controls the analog picture signal and the analog voice signal so as to be outputted from the output terminals 59, 60, in step S27d.

Thereafter, the control section 61 determines whether or not a picture recording end time based on picture recording reservation has been reached in step S27e. In the case where the determination result is affirmative (YES), the control section stops again outputs of the analog picture signal and the analog voice signal from the output terminals 59, 60 in a state in which power is supplied in step S27f, and terminates processing (in step S27g).

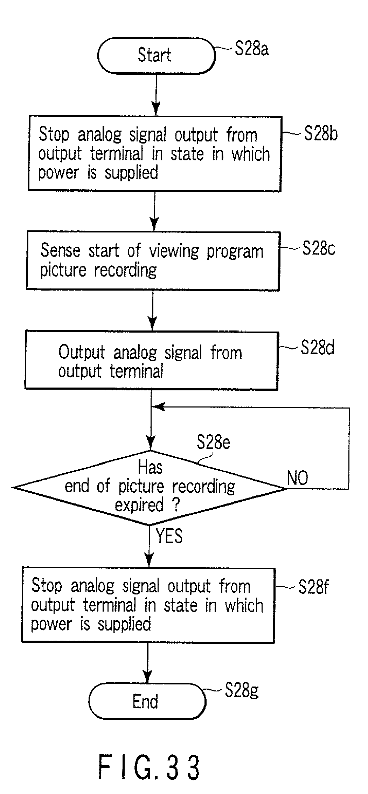

FIG. 33 shows a flow chart for explaining an operation during picture recording using the viewing program picture recording function in the case where the above-described output setting is provided. When this operation is started (in step S28a), the control section 61 stops outputs of the analog picture signal and the analog voice signal from the output terminals 59, 60 in a state in which power is supplied, and, for example, any broadcast is channel-selected, and is provided for viewing in step S28b.

Then, when the control section 61 senses that picture recording of a viewing program has been started in step S28c, the control section controls the analog picture signal and the analog voice signal so as to be outputted from the output terminals 59, 60 in step S28d.

Thereafter, the control section 61 determines whether or not picture recording has terminated in step S28e. In the case where the determination result is affirmative (YES), the control section stops again outputs of the analog picture signal and the analog voice signal from the output terminals 59, 60 in a state in which power is supplied in step S28f, and terminates processing (in step S28g).

In addition, the digital television broadcast receiver 11, as described previously, has a picture recording program search function of searching a desired program from among a variety of programs recorded in a variety of digital picture recorders or recording media by the above-described picture recording reservation function and viewing program picture recording function.

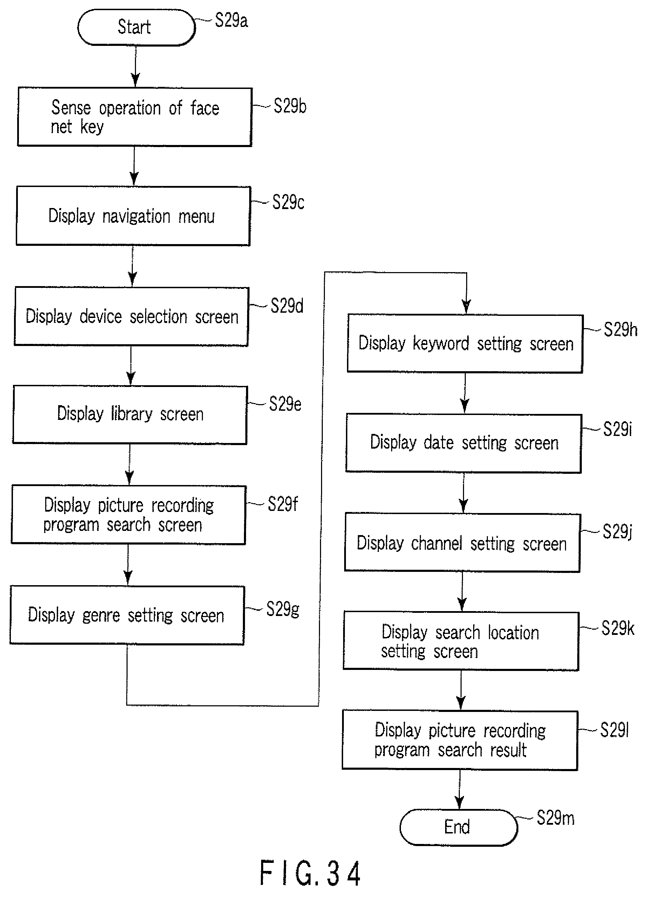

FIG. 34 shows a flow chart for explaining a search operation by using the picture recording program search function. This operation is started (in step S29a) in such a manner that the user operates the face net key 17j of the remote controller 17.

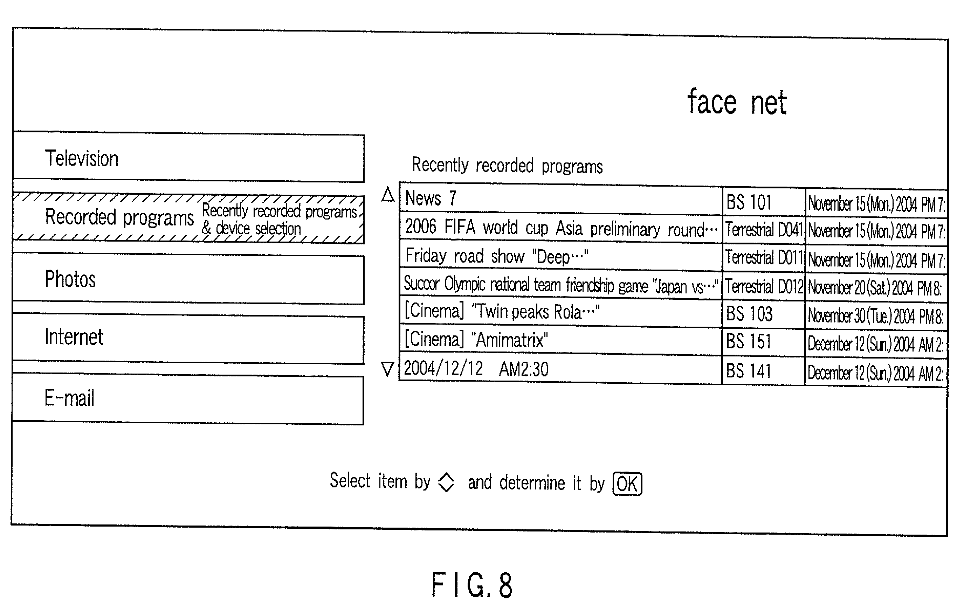

That is, when the control section 61 senses the operation of the face net key 17j in step S29b, the control section starts up face net (navigation) in step S29c, and causes the picture display device 14 to display a navigation screen as previously shown in FIG. 8.

On the navigation screen, five items "television", "recorded programs", "photos", "Internet", and "E-mail" are selectively displayed. This selection is executed by operating the cursor keys 17f of the remote controller 17 to select a desired item, and then, operating the [OK] key 17g. The selected item is displayed to be highlighted on the screen in order to discriminate it from other items on the screen. FIG. 8 shows a state in which an item "recorded programs" has been selected, by way of hatching.

Here, when the user selects the item "recorded programs" and selectively sets an item "device selection" included therein, the control section 61 causes a device selection screen as previously shown in FIG. 16 to be displayed in step S29d.

The device selection screen displays a list of a variety of devices connected to the first and second LAN terminals 21, 22, the USB terminal 23, and the i.Link terminal 24, the memory cards 19, 20 mounted on the card holders 66, 68, or the like, based on the latest information recognized by the control section 61. Thus, the user can select a desired device or memory card from the device selection screen.

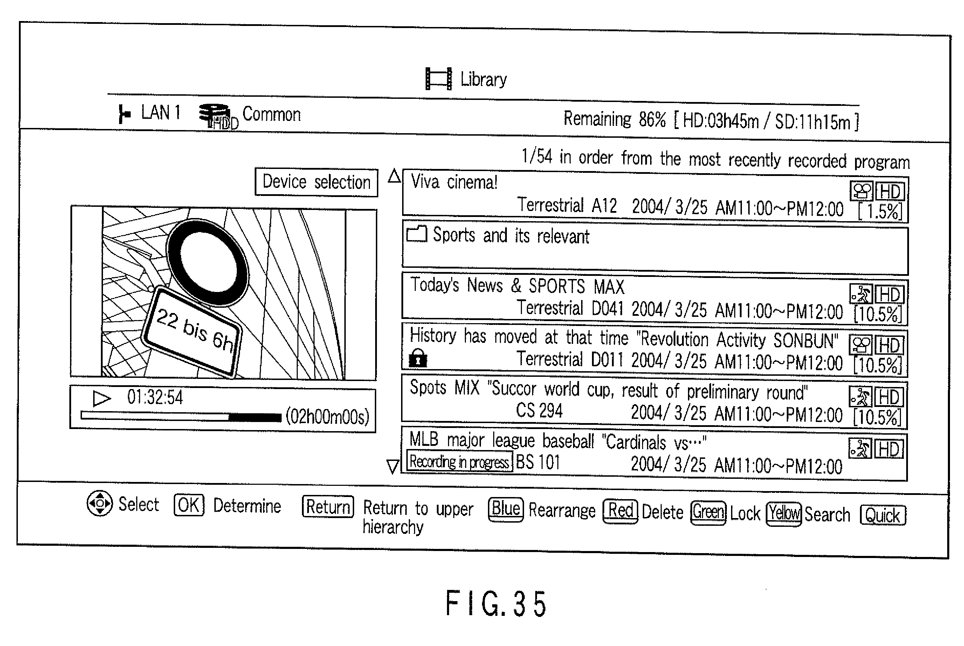

Then, in the case where the control section 61 senses that a specific digital picture recorder (for example, the HDD 25 which is NAS connected to the first LAN terminal 21) has been selected from the device selection screen, the control section makes inquiry to the HDD 25 and causes a library screen as shown in FIG. 35 to be displayed in step S29e.

The library screen displays a list of all the programs recorded in the HDD 25. In this case, a title, a channel, a picture recording date and time, a genre, an image quality and the like are displayed for each program. In addition, the library screen can display a currently recorded program by providing an icon indicating "recording in progress".

In the case of the library, a maximum of six programs are displayed on one screen. In the case where more than six programs are recorded, all the programs can be displayed by operating the cursor keys 17f or page change keys 17i of the remote controller 17 to vertically move the cursor.

The HDD 25 can store a program in the form of a folder. For example, a folder "sports or its relevant" is created, folders "Olympic", "Regional sports event" and the like are created under the folder, and folders "marathon", "swimming" and the like are further created under the folder "Olympic", thereby making it possible to hierarchically manage recorded programs. In the case where a folder is created on the library screen shown in FIG. 35, a folder at its highest hierarchy ("sports or its relevant" in FIG. 35) is displayed.

In the case where the control section 61 senses that the yellow color key 17m of the remote controller 17 has been operated in a state in which the library screen is displayed, the control section causes a recorded program search screen as shown in FIG. 36 to be displayed in step S29f.

On the recorded program search screen, it is possible to set five search conditions such as "genre", "keyword", "date", "channel", and "search location". Then, the control section 61 makes a search for a program which conforms to at least one of the five search conditions from among all the programs displayed on the library screen, namely, from among all the programs recorded in the HDD 25.

It is also possible to provide settings so as to search a program which falls under logical products or logical sums of plural kinds of combinations other than a combination of all the five search conditions, that is, any two, any three, or any four conditions. In addition, it is possible to provide settings so as to search a program which falls under the logical products or logical sums of all the five search conditions. These settings are achieved by the user operation.

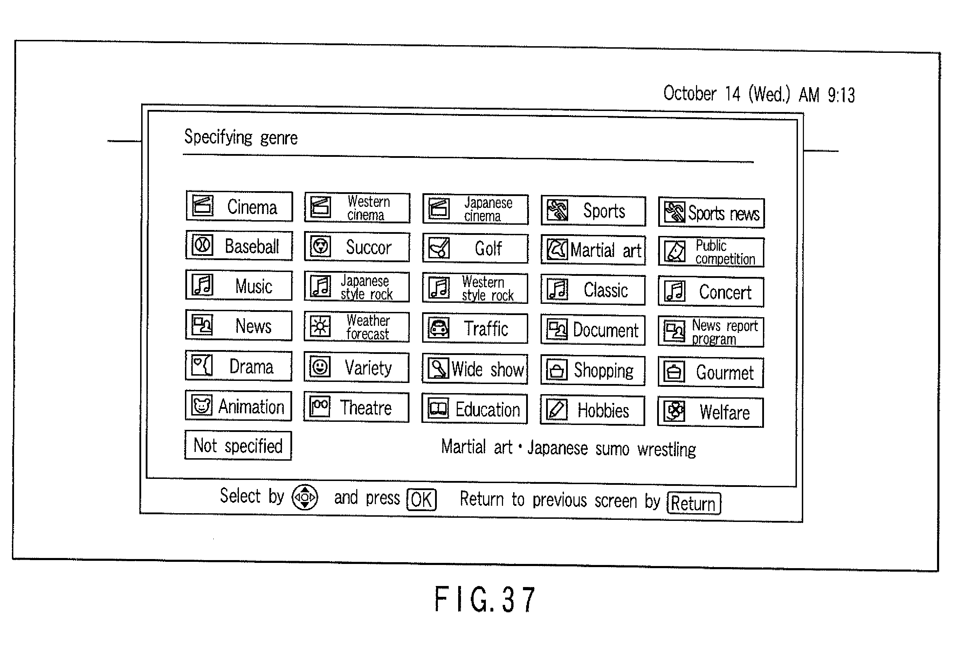

That is, when the control section 61 selects a "genre" as a search condition from the recorded program search screen, the control section causes a genre setting screen as shown in FIG. 37 to be displayed in step S29g.

On the genre setting screen, items indicating a plurality of genres such as "cinema", "western cinema, "Japanese cinema", and "sports" are displayed as a list, so that the user can select an item corresponding to an arbitrary genre, making it possible to search a program which corresponds to the set genre. Note that it is possible to disable a genre from being specified as a search condition by selecting an item "Not specified".

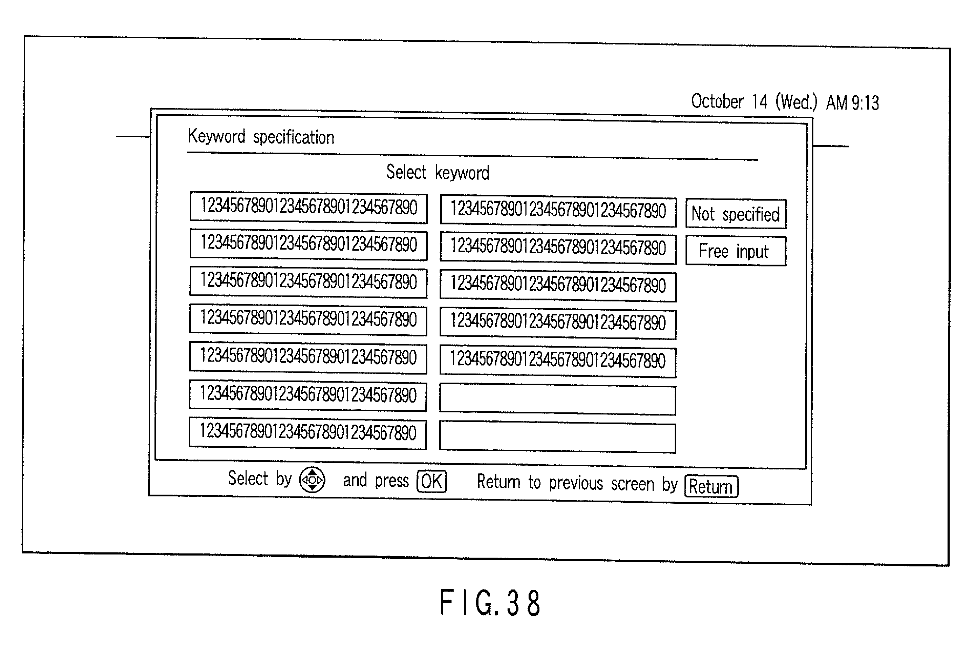

In the case where genre setting has normally terminated or in the case where the return key 17k of the remote controller 17 has been operated, the recorded program search screen shown in FIG. 36 is restored again. When the user selects a "keyword" as a search condition from the recorded program search screen, the control section 61 causes a keyword setting screen as shown in FIG. 38 to be displayed in step S29h.

On the keyword setting screen, the user can set a maximum of 14 keywords, enabling a program search based on, for example, a logical sum of the set keyword. It is also possible to disable the keyword from being specified as a search condition by selecting the item "Not specified".

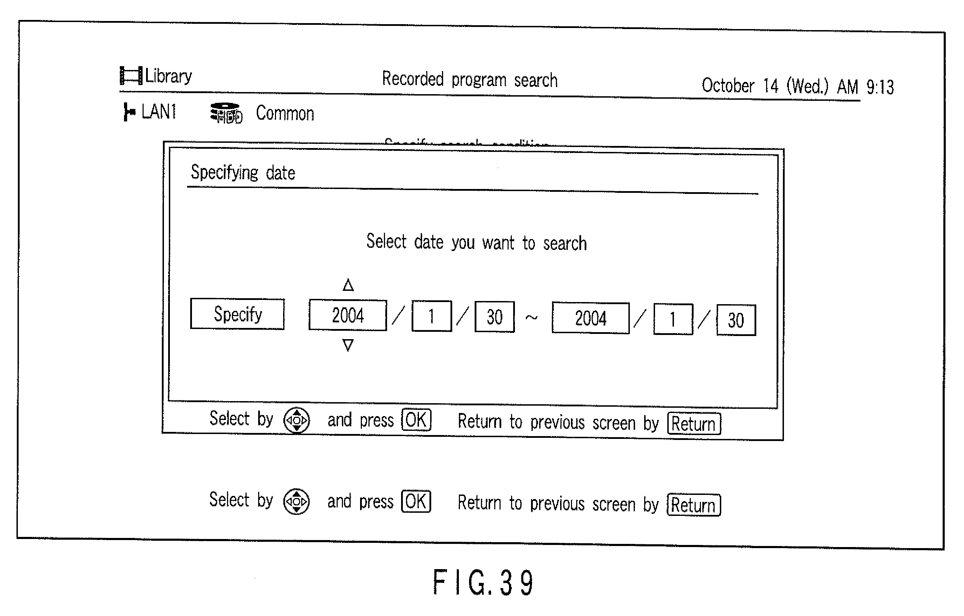

In the case where keyword setting has normally terminated, or alternatively, in the case where the key 17k of the remote controller 17 has been operated, the recorded program search screen shown in FIG. 36 is restored again. When the user selects a "date" as a search condition from the recorded program search screen, the control section 61 causes a date setting screen as shown in FIG. 39 to be displayed in step S29i.

On the date setting screen, the user can set a period such as a specific date from "year, month, day" to "year, month, day", and can search a program recorded at a set date or within a period.

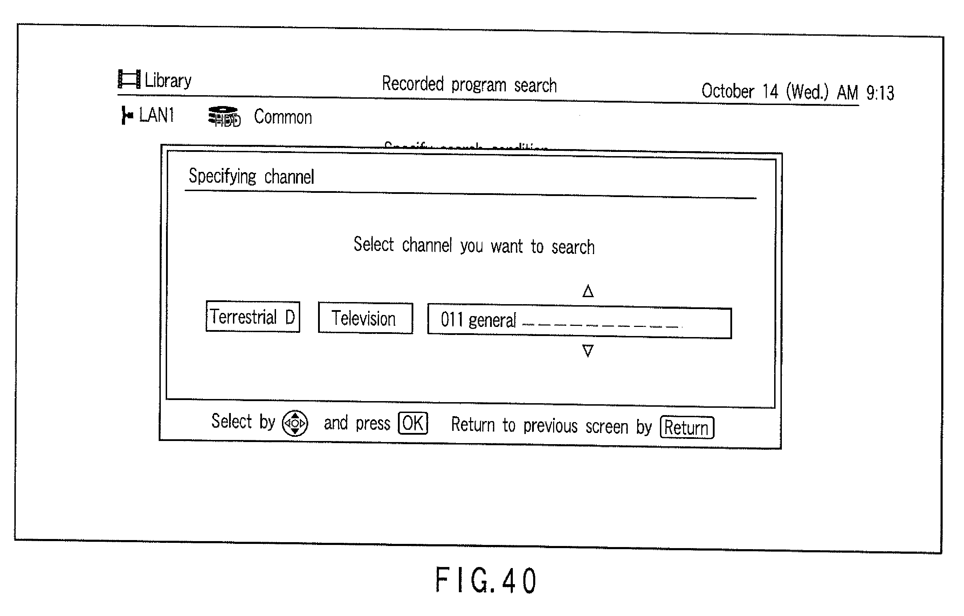

In the case where date setting has normally terminated, or alternatively, in the case where the return key 17 of the remote controller 17 has been operated, the recorded program search screen shown in FIG. 36 is restored again. When the user selects a "channel" as a search condition from the recorded program search screen, the control section 61 causes a channel setting screen as shown in FIG. 40 to be displayed in step S29j.

On the channel setting screen, a channel can be set for each broadcast mode such as terrestrial digital broadcasting, and it is also possible to search a program recorded by the set channel.

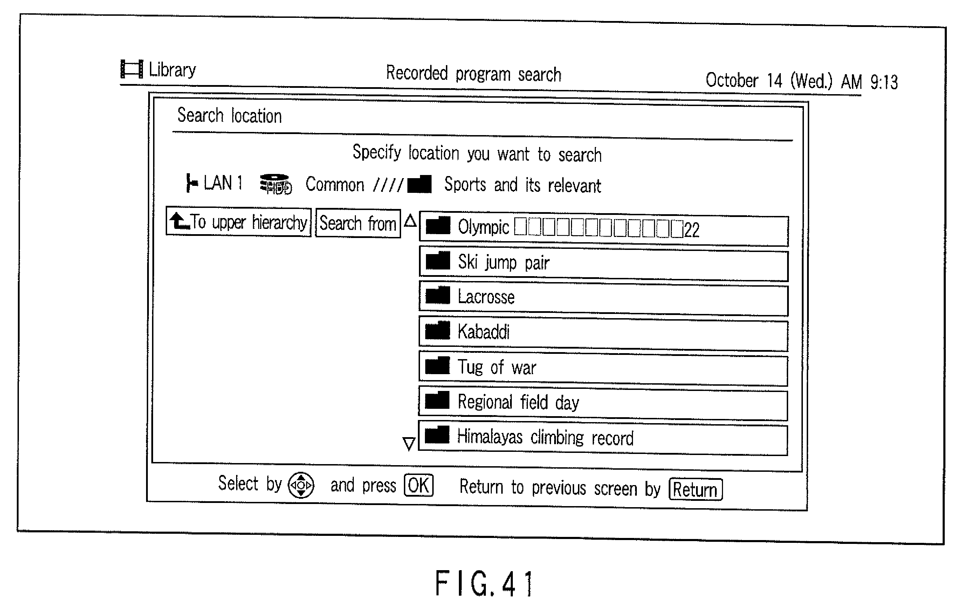

In the case where channel setting has normally terminated, or alternatively, in the case where the return key 17k of the remote controller 17 has been operated, the recorded program search program shown in FIG. 36 is restored again. When the user selects a "search location" as a search condition from the recorded program search screen, the control section 61 causes a search location setting screen as shown in FIG. 41 to be displayed in step S29k.

On the search location setting screen, it is possible to set a search location for specifying a folder which makes a search for a program regardless of a hierarchy. It is also possible to search a program while the above genre, keyword, date, and channel are specified as search conditions in one or a plurality of set folders.

In the case where search location setting has normally terminated, or alternatively, in the case where the key 17k of the remote controller 17 has been operated, the recorded program search screen shown in FIG. 36 is restored again.

As described above, five search conditions can be set, respectively. There is no need for sequentially setting the genre, keyword, date, channel, and search location, as described above, and it is possible to set them in any condition.

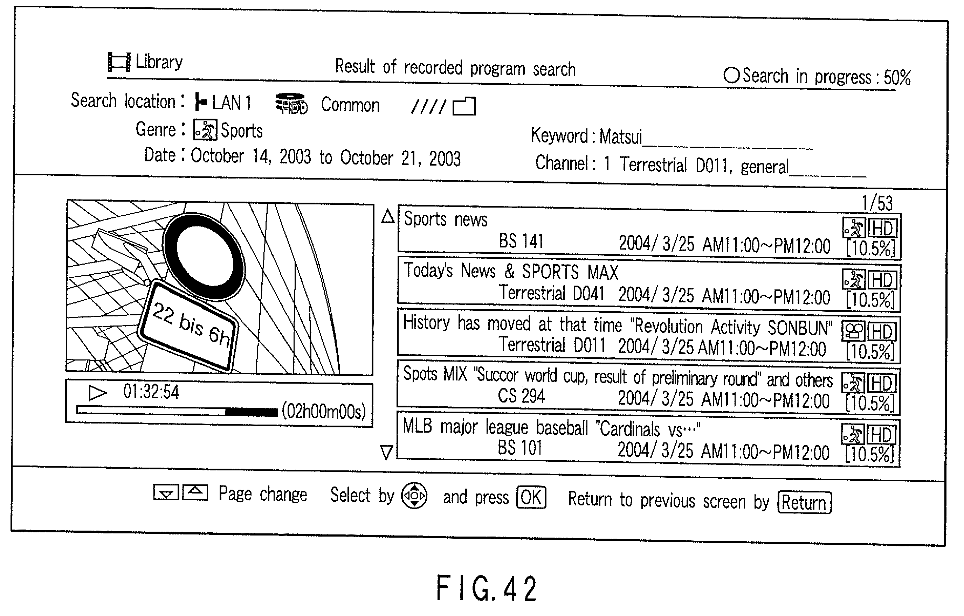

When the user selects an item "search start" from the recorded program search screen in a state in which the five search locations are thus set, the control section 61 executes a program search based on the five search conditions for all the programs recorded in the HDD 25 in step 5291. The program search is achieved by making inquiry to the HDD 25. When the program search terminates, the control section 61 causes a display section to display a screen of a recorded program search result as shown in FIG. 42, and terminals processing (step S29m).

The screen of the recorded program search result displays a specified digital picture recorder or recording medium (the HDD 25 in this case), five search conditions, and a list of searched programs.

Here, the above digital television broadcast receiver 11 has a function of operating the cursor keys 17f of the remote controller 17 from the screen of the recorded program search result displayed as described above to select a desired program, and then, operating the [OK] key 17g, thereby making it possible to reproduce that program.

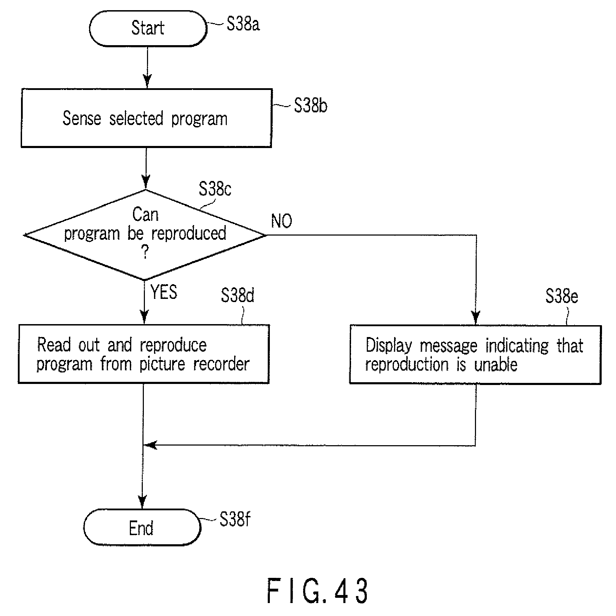

FIG. 43 shows a flow chart for explaining an operation for reproducing a selected program. That is, when this operation is started (in step S38a), the control section 61 senses a program selected from the screen of the recorded program search result in step S38b. Then, the control section determines whether or not that program can be reproduced from a digital picture recorder having the thus selected program recorded therein.

This determination is made as to whether or not a format of the recorded program is compatible with a picture display in the digital television broadcast receiver 11, whether or not a recorded program file is destroyed, or the like.

In the case where the determination result is affirmative in the step S38c (YES), the control section 61 controls information on a program requested for reproduction to be read out and reproduced from a target digital picture recorder in step S38d, and terminates processing (in step S38f).

In the case where the determination result is negative in the step S38c (NO), the control section 61 causes the picture display device 14 to display a message indicating that the requested program cannot be reproduced in step S38e, and terminates processing (in step S38f).

According to the above-described operation for searching the recorded program, by specifying a connected digital picture recorder or recording medium such as a memory card and setting search conditions such as a genre, a keyword, a date, a channel, and a search location, it is possible to search a recorded program which conforms to a search condition from the specified picture recorder or recording medium. This makes it possible to speedily search a desired picture recording program from a plurality of picture recorders or recording media connected via a network.

In addition, in the above-described search operation, a specific picture recorder or recording medium is specified from a plurality of picture recorders or recording media connected via a network, and a program is searched based on a search condition from the specified picture recorder or recording medium. However, without being limited thereto, for example, it is also possible to construct a server which integrally manages all the picture recorders or recording media over the network so as to make a search for a program based on a search condition for all the connected picture recorders or recording media.

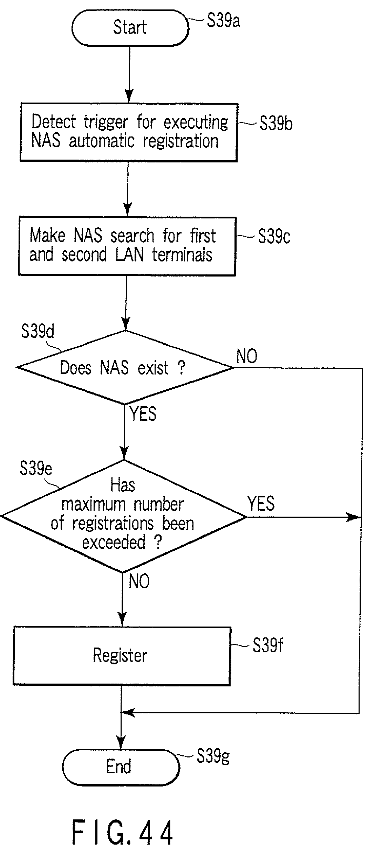

FIG. 44 shows a flow chart for explaining an operation in which the digital television broadcast receiver 11 automatically searches and registers NAS (the HDD 25, 27 in FIG. 1) which is a network connection type digital picture recorder connected to the above first and second LAN terminals 21, 22.

When this operation is started (in step S39a), the control section 61 detects that a predetermined trigger for executing NAS automatic registration has been provided in step S39b. The predetermined trigger provided to execute NAS automatic registration includes, for example, turning ON the power supply of the digital television broadcast receiver 11 (operating the power supply key 17a of the remote controller 17); starting up a set menu for registering NAS; and requesting execution of a reproducing operation or a recording operation for the NAS connected to the first and second LAN terminals 21, 22.

Then, the controls section 61 makes a search for NAS relevant to the first and second LAN terminals 21, 22 in step S39c, and then, determines whether or not NAS exists in step S39d. In the case where the determination result is negative (NO), the control section terminates processing (in step S39g).

In addition, in the case where the determination result is affirmative in the step S39d (YES), the control section 61 determines whether or not a maximum number of registrations has been exceeded in step S39e. In the case where the determination result is affirmative (YES), the control section terminals processing (step S39g).

On the other hand, in the case where the determination result is negative in the step S39e (NO), the control section 61 registers NAS whose existence has been detected in the nonvolatile memory 64 in step S39f, and terminates processing (step S39g).

According to this operation, when a predetermined trigger for executing NAS automatic registration has been provided, a search is automatically made for NAS with respect to the first and second LAN terminals 21, 22, and in the case where NAS exists, registration is carried out. Thus, there is no need for the user to open a set menu and to search and register NAS over the network, making it possible to reduce the user setting.

With respect to the thus registered NAS, the digital television broadcast receiver 11 can make control so as to record, for example, the received television broadcast program and a digital picture signal (photo) etc. encoded in a mode which conforms to the JPEG (Joint Photographic Experts Group) standard stored in the first memory card 19, the digital camera 37 and the like.

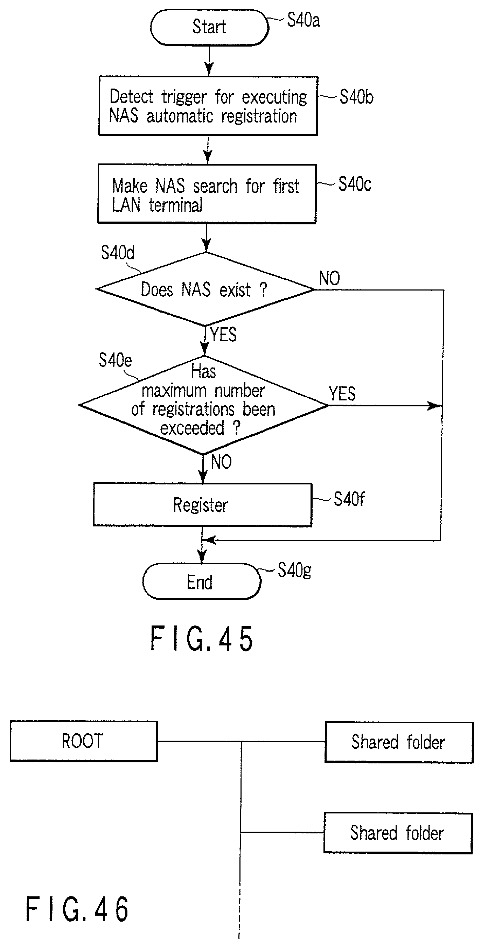

FIG. 45 shows a flow cart for explaining an operation in which the digital television broadcast receiver 11 automatically records NAS (the HDD 25 in FIG. 1) connected to the first LAN terminal 21. (In the digital television broadcast receiver 11 described in the present embodiment, the first LAN terminal 21 is used as an HDD exclusive port, but this terminal may be used as an NAS exclusive port to which only NAS is connected.)

When this operation is started (in step S40a), the control section 61 detects that a predetermined trigger for executing NAS automatic registration has been provided in step S40b. The predetermined trigger provided to execute NAS automatic registration includes, for example, turning ON the power supply of the digital television broadcast receiver 11 (operating the power supply key 17a of the remote controller 17); starting up a set menu for registering NAS; and requesting execution of a reproducing operation or a recording operation for NAS connected to the first LAN terminal 21 (NAS exclusive port).

The control section 61 makes a search for NAS with respect to the first LAN terminal 21 in step S40c, and determines whether or not NAS exists in step S40d. In the case where the determination result is negative (NO), the control section terminals processing (step S40g).

In addition, in the case where the determination result is affirmative in step S40d (YES), the control section 61 determines whether or not a maximum number of registrations has been exceeded in step s40e. In the case where the determination result is affirmative (YES), the control section terminates processing (in step S40g).

On the other hand, in the case where the determination result is negative in the step S40e (NO), the control section 61 registers NAS whose existence has been detected in the nonvolatile memory 64 in step S40f, and terminates processing (in step S40g).

According to this operation, when a predetermined trigger for executing NAS automatic registration has been provided, a search is automatically made for NAS with respect to the first LAN terminal 21, and in the case where NAS exists, registration is carried out. Thus, there is no need for the user to open a set menu and to search and register NAS over the network, making it possible to reduce the user setting.

FIG. 46 shows an example of a directory structure in NAS. This directory structure is in a hierarchical mode, and a plurality of shared folders (two shared folders illustrated) are created under a root directory (ROOT) which is a top hierarchy.

In this case, the shared folders include: a guest user shared folder which can be used by an unspecified number of users via a network; and a shared folder which can be used by only a user who has entered a password.

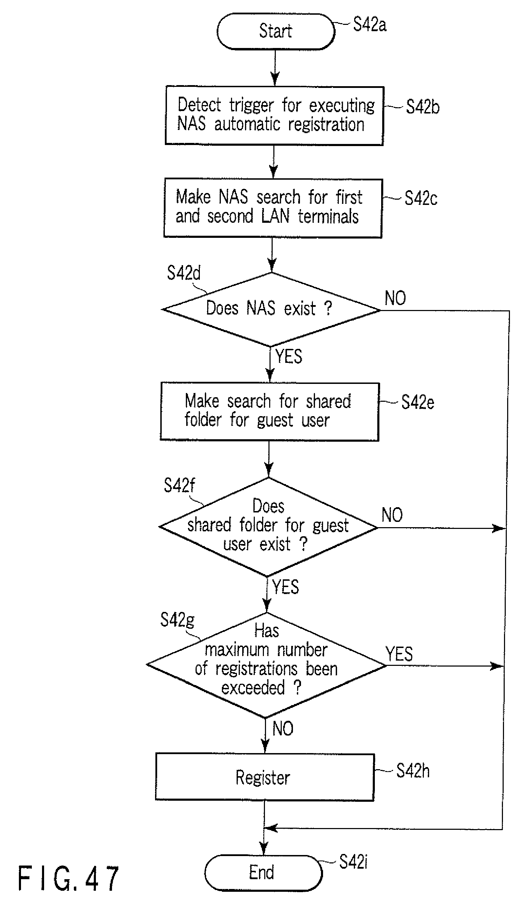

FIG. 47 shows a flow chart for explaining an operation for, in the case where a guest user shared folder exists in searched NAS when automatically registering NAS connected to the first and second LAN terminals 21, 22, automatically registering that shared folder.

When this operation is started (in step S42a), the control section 61 detects a predetermined trigger for executing NAS automatic registration has been provided in step S42b. This trigger is identical to that described in the flow chart of FIG. 44.

The control section 61 makes a search for NAS with respect to the first and second LAN terminals 21, 22 in step S42, and then, determines whether or not NAS exists in step S42d. In the case where the determination result is negative (NO), the control section terminates processing (step S42i).

In addition, in the case where the determination result is affirmative in the step S42d (YES), the control section 61 makes a search for a guest user shared folder from NAS whose existence has been detected in step S42e. Then, the control section determines whether or not the guest user shared folder NAS exists in step S42f. In the case where the determination result is negative (NO), the control section terminates processing (in step S42i).

On the other hand, in the case where it is determined that the guest user shared folder NAS exists in the step S42f (YES), the control section 61 determines whether or not a maximum number of registrations have been exceeded in step S42g. In the case where the determination result is affirmative (YES), the control section terminates processing (in step s42i).

In the case where the determination result is negative in the step S42g (NO), the control section 61 registers in the nonvolatile memory 64 the NAS whose existence has been detected and a guest user shared folder included in the NAS in step S42h, and terminates processing (in step S42i).

According to this operation, NAS and the guest user shared folder included in the NAS are automatically registered. Thus, the user of the digital television broadcast receiver 11 can record and manage information in the NAS shared folder, thereby making it possible for the user to handle the information more conveniently.

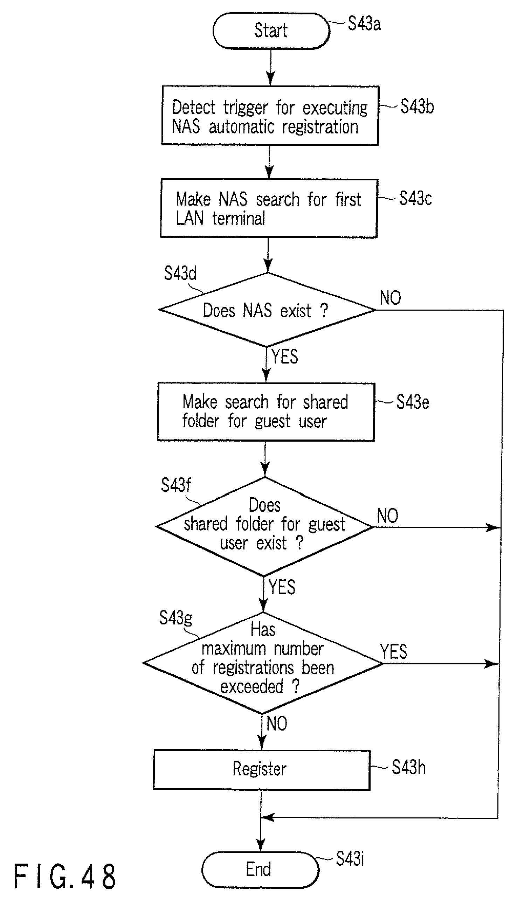

FIG. 48 shows a flow chart for explaining an operation for, in the case where a guest user shared folder exists in the searched NAS when NAS connected to the first LAN terminal 21 (NAS exclusive port) is automatically registered, automatically registering that shared folder.

When this operation is started (in step S43a), the control section 61 detects that a predetermined trigger for executing NAS automatic registration has been provided in the step S43b. This trigger is identical to that described in the flow chart of FIG. 45.

The control section 61 makes a search for NAS with respect to the first LAN terminal 21 in step S43c, and then, determines whether or not NAS exists in step S43d. In the case where the determination result is negative (NO), the control section terminates processing (in step S43i).

In addition, in the case where the determination result is affirmative in the step S43d (YES), the control section 61 makes a search for a guest user shared folder from NAS whose existence has been detected in step S43e, and then, determines whether or not the guest user shared folder NAS exists in step S43f. In the case where the determination result is negative (NO), the control section terminates processing (step S43i).

On the other hand, in the case where the determination result is affirmative in the step S43f (YES), the control section 61 determines whether or not a maximum number of registrations have been exceeded in step S43g. In the case where the determination result is affirmative (YES), the control section terminates processing (in step S43i).

In the case where the determination result is negative in the step S43g (NO), the control section 61 registers in the nonvolatile memory 64 the NAS whose existence has been detected and the guest user shared folder included in the NAS in step S43h, and terminates processing (in step S43i).

According to this operation, NAS and the guest user shared folder included in the NAS are automatically registered. Thus, the user of the digital television broadcast receiver 11 can record and manage information in the NAS shared folder, thus making it possible for the user to handle the information more conveniently.

## Claims

1. A signal reproducing apparatus **characterized by** comprising:
an input section (21 to 24, 44, 49, 56a to 56d, 66) configured to receive a signal including a program;
a processing section (14, 15, 17, 45 to 47, 50 to 55, 57, 58, 61) configured to carry out processing for obtaining a program from the signal inputted to the input section (21 to 24, 44, 49, 56a to 56d, 66);
a picture recording control section (17, 61) configured to cause a plurality of picture recorders (19, 25, 27, 28, 33, 34, 36 to 39, 41, 42) to selectively record the program obtained by the processing section (14, 15, 17, 45 to 47, 50 to 55, 57, 58, 61); and
a display control section (14, 54, 57, 58, 61) configured to display information indicating the program recorded in each of the plurality of picture recorders (19, 25, 27, 28, 33, 34, 36 to 39, 41, 42) by the picture recording control section (17, 61) to be listed by a preset predetermined number dating back from the most recently recorded program.

2. A signal reproducing apparatus according to claim 1, **characterized in that** the display control section (14, 54, 57, 58, 61) comprises an information recording section (61) configured to record in a recording medium (64): information indicating a picture recorder (19, 25, 27, 28, 33, 34, 36 to 39, 41, 42) selected by the picture recording control section (17, 61); and information indicating a program recorded in the picture recorder (19, 25, 27, 28, 33, 34, 36 to 39, 41, 41) in association with each other, and
on the basis of the information recorded in the recording medium (64) by the information recording section (61), information indicating the programs recorded in said plurality of picture recorders (19, 25, 27, 28, 33, 34, 36 to 39, 41, 42) are displayed to be listed by a preset predetermined number dating back from most recently recorded information.

3. A signal reproducing apparatus according to claim 2, **characterized by** further comprising:
an information selector section (17, 61) configured to select predetermined information from among the information displayed to be listed by the display control section (14, 54, 57, 58, 61);
a specifying section (61) configured to specify the picture recorder (19, 25, 27, 28, 33, 34, 36 to 39, 41, 42) which has recorded a program corresponding to the information selected by the information selector section (17, 61) on the basis of the information recorded in the recording medium (64);
a determining section (61) configured to read out the program from the picture recorder (19, 25, 27, 28, 33, 34, 36 to 39, 41, 42) specified by the specifying section (61), and determine whether or not the reproduction is possible; and
a reproducing section (14, 15, 47, 54, 55, 57, 58, 61) configured to, when the determining section (61) determines that the reproduction is possible, read out and reproduce the program from the picture recorder (19, 25, 27, 28, 33, 34, 36 to 30, 41, 42) specified by the specifying section (61).

4. A signal reproducing apparatus according to any of claims 1 to 3, **characterized in that** the display control section (14, 54, 57, 58, 61) comprises:
a menu display section (14, 54, 57, 58, 61) configured to display a navigation menu having a plurality of selection items;
an item selector section (14, 17, 61) configured to select a predetermined item from the navigation menu displayed at the menu display section (14, 54, 57, 58, 61); and
a picture display section (14, 54, 57, 58, 61) configured to display part of a picture which is displayed by the item selected by the item selector section (14, 17, 61) on a screen which is identical to the navigation menu.

5. A signal reproducing method **characterized by** comprising:
a first step (21 to 24, 44, 49, 56a to 56d, 66) in which a signal including a program is inputted;
a second step (14, 15, 17, 45 to 47, 50 to 55, 57, 58, 61) in which a program is obtained from the signal inputted in the first step (21 to 24, 44, 49, 56a to 56d, 66);
a third step (17, 61, S4d) in which a plurality of picture recorders (19, 25, 27, 28, 33, 34, 36 to 39, 41, 42) are caused to selectively record the program obtained in the second step (14, 15, 17, 45 to 47, 50 to 55, 57, 58, 61); and
a fourth step (14, 54, 57, 58, 61, S6e) in which the information indicating the programs recorded in the plurality of picture recorders (19, 25, 27, 28, 33, 34, 36 to 39, 41, 42) in the third step (17, 61, S4d) are displayed to be listed by a preset predetermined number dating back from the most recently recorded program.

6. A signal reproducing method according to claim 5, **characterized in that** the fourth step (14, 54, 57, 58, 61, S6e) comprises a fifth step (61, S4f) in which the information indicating the programs recorded in the plurality of picture recorders (19, 25, 27, 28, 33, 34, 36 to 39, 41, 42) in the third step (17, 61, S4d), and information indicating a picture recorder (19, 25, 27, 28, 33, 34, 36 to 39, 41, 42) which has recorded the programs are recorded in a recording medium (64) in association with each other, and
on the basis of the information recorded in the recording medium (64) in the fifth step (61, S4f), the information indicating the programs recorded in said plurality of picture recorders (19, 25, 27, 28, 33, 34, 36 to 39, 41, 42) are displayed to be listed by a preset predetermined number dating back from the most recently recorded information.

7. A signal reproducing method according to claim 6, **characterized by** further comprising:
a sixth step (17, 61, S6f) in which predetermined information is selected from among the information displayed to be listed in the fourth step (14, 54, 57, 58, 61, S6e);
a seventh step (61) in which the picture recorder (19, 25, 27, 28, 33, 34, 36 to 39, 41, 42) which has recorded a program corresponding to the information selected in the sixth step (17, 61, S6f) on the basis of the information recorded in the recording medium (64);
an eighth step (61, S6g) in which the program is read out from the picture recorder (19, 25, 27, 28, 33, 34, 36 to 39, 41, 42) specified in the seventh step (61) and it is determined whether or not the reproduction is possible; and
a ninth step (14, 15, 47, 54, 55, 57, 58, 61, S6h) in which, when the determination result is affirmative in the eighth step (61, S6g), the program is read out from the picture recorder (19, 25, 27, 28, 33, 34, 36 to 39, 41, 42) specified in the seventh step (61), and the read-out program is reproduced.

8. A program search apparatus **characterized by** comprising:
an acquiring section (22, 43 to 51, 61, 70) configured to acquire program information relating to a program to be distributed;
a setting section (14, 17, 54, 57, 58, 61) configured to enable settings of a plurality of program search conditions, each of which includes plural types of search conditions in order to make a search for a predetermined program from the programs to be distributed;
a search section (61) configured to make a search for a program on the basis of each of the plurality of program search conditions set by the setting section (14, 17, 54, 57, 58, 61) from the program information acquired by the acquiring section (22, 43 to 51, 61, 70); and
a search result display section (14, 54, 57, 58, 61) configured to, on the basis of each of the plurality of program search conditions set by the setting section (14, 17, 54, 57, 58, 61), display and list the programs searched by the search section (61) to be mixed regardless of which program search condition is based upon to make a search for the program and to display which program search condition is based upon to make a search for the program, with respect to the program displayed to be listed.

9. A program search apparatus according to claim 8, **characterized in that** the setting section (14, 17, 54, 57, 58, 61) sets any of a genre, a keyword, and a channel as the plural types of search conditions included in the program search condition.

10. A signal processor apparatus **characterized by** comprising:
a connecting section (21 to 24, 44, 49, 56a to 56d, 66) configured to be connected to a plurality of devices (19, 25, 27, 28, 33, 34, 36 to 39, 41, 42) including a NAS (25);
a connected device register section (61, 64) configured to register a plurality of devices (19, 25, 27, 28, 33, 34, 36 to 39, 41, 42) connected to the connecting sections (21 to 24, 44, 49, 56a to 56d, 66);
a display section (14, 54, 57, 58, 61) configured to display as a list the plurality of devices (19, 25, 27, 28, 33, 34, 36 to 39, 41, 42) registered in the connected device register section (61, 64) and to make a display indicating that the listed devices are exclusive ports with respect to the NAS (25); and
a control section (17, 61) configured to selectively control the plurality of devices (19, 25, 27, 28, 33, 34, 36 to 39, 41, 42) registered in the connected device register section (61, 64).

11. A signal processor apparatus according to claim 10, **characterized in that** the connected device register section (61, 64) comprises:
a trigger detecting section (61) configured to detect that a predetermined trigger for registering the devices (19, 25, 27, 28, 33, 34, 36 to 39, 41, 42) connected to the connecting sections (21 to 24, 44, 49, 56a to 56d, 66) has been provided;
a device search section (61) configured to make a search for the devices (19, 25, 27, 28, 33, 34, 36 to 39, 41, 42) connected to the connecting sections (21 to 24, 44, 49, 56a to 56d, 66) when the trigger detecting section (61) detects that the predetermined trigger has been provided; and
a search device register section (61) configured to register the devices (19, 25, 27, 28, 33, 34, 36 to 39, 41, 42) searched by the device search section (61).

12. A signal processor apparatus according to claim 11, **characterized in that** the trigger detecting section (61) detects as the trigger at least one of turning on power; starting up a set menu for registering the device (19, 25, 27, 28, 33, 34, 36 to 39, 41, 42); and requesting execution of a reproducing operation or a recording operation with respect to the devices (19, 25, 27, 28, 33, 34, 36 to 39, 41, 42).

13. A signal processor apparatus according to any of claims 10 to 12, **characterized in that** the connecting section (21 to 24, 44, 49, 56a to 56d, 66) comprises:
a first connector terminal (21) configured to be set so as to exclusively connect the NAS (25); and
a second connector terminal (22 to 24) configured to be set to connect the devices (21 to 24, 44, 49, 56a to 56d, 66) other than the NAS (25).

14. A recorded program search apparatus **characterized by** comprising:
a connecting section (21 to 24, 44, 49, 56a to 56d, 66) configured to be connected to a plurality of picture recorders (19, 25, 27, 28, 33, 34, 36 to 39, 41, 42);
a first selector section (17, 61) configured to select a predetermined picture recorder (19, 25, 27, 28, 33, 34, 36 to 39, 41, 42) from the plurality of picture recorders (19, 25, 27, 28, 33, 34, 36 to 39, 41, 42) connected to the connecting section (21 to 24, 44, 49, 56a to 56d, 66);
a setting section (17, 61) configured to enable settings of plural types of search conditions for making a search for a recorded program from the picture recorder (19, 25, 27, 28, 33, 34, 36 to 39, 41, 42) selected by the first selector section (17, 61);
a search section (61) configured to make a search for a program on the basis of the plural types of search conditions set by the setting section (17, 61) from among the programs recorded in the picture recorder (19, 25, 27, 28, 33, 34, 36 to 39, 41, 42) selected by the first selector section (17, 61); and
a first display section (14, 54, 57, 58, 61) configured to display as a list the information indicating the program searched by the search section (61).

15. A recorded program search apparatus according to claim 14, **characterized in that** the setting section (17, 61) sets any of a genre, a keyword, a date, and a channel as the plural types of search conditions.

16. A recorded program search apparatus according to claim 14 or 15, **characterized in that** the search section (61) makes inquiry to the picture recorder (19, 25, 27, 28, 33, 34, 36 to 39, 41, 42) selected by the first selector section (17, 61), thereby making a search for a program on the basis of the plural types of search conditions set by the setting section (17, 61).

17. A recorded program search apparatus according to claim 16, **characterized by** further comprising a second display section (14, 54, 57, 58, 61) configured to display a list of recorded programs with respect to the picture recorder (19, 25, 27, 28, 33, 34, 36 to 39, 41, 42) selected by the first selector section (17, 61).

18. A recorded program search apparatus according to claim 17, **characterized in that**, when a program is stored in a folder based hierarchical structure in the picture recorder (19, 25, 27, 28, 33, 34, 36 to 39, 41, 42) selected by the first selector section (14, 54, 57, 58, 61), the second display section (14, 54, 57, 58, 61) adds a folder at a top hierarchy thereof to the display as a list of recorded programs.

19. A recorded program search apparatus according to claim 18, **characterized in that** the setting section (17, 61) sets a search location for specifying a folder which makes a search for a program as the search condition.

20. A recorded program search apparatus according to claim 16, **characterized by** further comprising:
a second selector section (17, 61) configured to select a predetermined program from among the programs searched by the search section (61); and
a reproducing section (14, 15, 47, 54, 55, 57, 58, 61) configured to read out and reproduce the program selected by the second selector section (17, 61) from the picture recorder (19, 25, 27, 28, 33, 34, 36 to 39, 41, 42).
